# EUROPEAN PATENT SPECIFICATION

(11) **EP 1 452 569 B1**
(45) Date of publication and mention of the grant of the patent: **10.01.2007**
(21) Application number: 04100444.1
(22) Date of filing: 06.02.2004
(51) Int. Cl.: C09D 11/10

(54) **Radiation curable ink compositions suitable for ink-jet printing.**
Für den Tintenstrahldruck geeignete strahlunghärtbare Tintenzusammensetzungen
Compositions d'encre durcissantes pour impression par jet d'encre

(30) Priority: 26.02.2003 EP 03100462
(43) Date of publication of application: 01.09.2004
(73) Proprietor: AGFA-GEVAERT, 2640 Mortsel (BE)
(72) Inventor: Vanmaele, Luc AGFA-GEVAERT, 2640, Mortsel (BE); Loccufier, Johan AGFA-GEVAERT, 2640, Mortsel (BE); Claes, Roland AGFA-GEVAERT, 2640, Mortsel (BE)

(56) References cited:
- EP-A- 0 825 230
- EP-A- 1 302 499
- US-A- 6 110 987
- US-B1- 6 270 561
- PATENT ABSTRACTS OF JAPAN vol. 0121, no. 28 (C-489), 20 April 1988 (1988-04-20) & JP 62 250081 A (TOYO INK MFG CO LTD), 30 October 1987 (1987-10-30)

## Description

### FIELD OF THE INVENTION

The present invention relates to radiation curable ink compositions containing polyhedral oligomeric silsesquioxanes (POSS).

### BACKGROUND OF THE INVENTION

Ink jet printing has become a technology of choice for short-run printing. A recent survey on progress and trends in ink jet printing technology is given by Hue *P. Le in Journal of Imaging Science and Technology Vol. 42 (1)*, *Jan*/*Febr 1998*.

In ink jet printing tiny drops of ink fluid are projected directly onto an ink receptor surface without physical contact between the printing device and the receptor. The printing device stores the printing data electronically and includes a mechanism for ejecting the drops image-wise. Printing is accomplished by moving the print head across the paper or vice versa.

The jetting of the ink droplets can be performed in several different ways. In a first type of process a continuous droplet stream is created by applying a pressure wave pattern. This process is known as continuous ink jet printing. In a first embodiment the droplet stream is divided into droplets which are electrostatically charged, deflected and collected, and into droplets that remain uncharged are undeflected and form the image. Alternatively, the charged deflected stream forms the image and the uncharged undeflected jet is collected. In this variant of continuous ink jet printing several jets are deflected to a different degree and thus record the image (multideflection system).

According to a second process the ink droplets can be created "on demand" ("DOD" or "drop on demand" method) whereby the printing device ejects the droplets only when they are used in imaging on a receiver thereby avoiding the complexity of drop charging, deflection hardware, and ink collection. In drop-on-demand printing the ink droplet can be formed by means of a pressure wave created by a mechanical motion of a piezoelectric transducer (so-called "piezo method"), or by means of discrete thermal pulses (so-called "bubble jet" method, or "thermal jet" method).

Ink compositions for ink jet typically include the following ingredients: dyes or pigments, water and/or organic solvents, humectants such as glycols, detergents, thickeners, polymeric binders and preservatives. Ink compositions can be roughly divided into:
- water-based inks, the drying mechanism involving absorption, penetration and evaporation;
- oil-based inks, the drying involving absorption and penetration;
- solvent-based inks, the drying primarily involving evaporation;
- hot melt or phase change inks, in which the ink vehicle is liquid at the ejection temperature but solid at room temperature and in which drying is replaced by solidification;
- UV-curable inks, in which drying is replaced by polymerization.

The first two types of ink compositions require a receiving medium that is more or less absorptive, whereas solvent based inks, hot melt inks or UV-curable inks are more suitable for non-absorbent substrates.

US 4,303,924 is an important basic patent on ink compositions for ink jet, satisfying the need for a low solvent content, and containing a UV-curable compound. It discloses a jet drop printing process utilizing a radiation curable jet printing ink, comprising: ejecting at high speed from an orifice or orifices a radiation curable ink composition comprising a mixture of (a) 5-80% of a low molecular weight multifunctional ethylenically unsaturated material which will polymerize and cure upon irradiation, (b) 0-90% of a low molecular weight monofunctional ethylenically unsaturated material for viscosity control, cured film flexibility and bond strength, (c) 0-15% of a reactive synergist to promote curing efficiency, (d) 0.2-10% of a solvent dye colorant which does not interfere with the curing efficiency, (e) 0.5-15% of an oil soluble salt to impart conductivity, (f) 0.2-20% of a photoinitiator, and (g) 0-30% of an organic polar solvent compatible with said mixture, said radiation curable ink having a viscosity of less than about 15 centipoise, a resistivity of approximately 50-5000 ohm-cm, and a surface tension of approximately 20-70 dynes/cm so that the stream of said ink composition issuing from said orifice or orifices breaks into droplets, passing said stream of droplets through a charge ring to thereby differentially charge said droplets, selectively deflecting said differentially charged droplets and directing them toward a paper substrate positioned so as to receive a portion of said differentially charged droplets, depositing at least a portion of said droplets in a pattern on said paper substrate, and passing said substrate having said pattern deposited thereon under a radiation source for a sufficient period of time to cure said radiation curable jet printing ink whereby there is formed on said substrate a pattern which is light absorptive at infrared wavelengths, smear resistant and waterproof.

EP-A 0 071 345 discloses a jet ink composition for producing visible indicia of a substrate, the ink composition being formulated from a polymerizable epoxy resin, a colorant and a solvent, characterized in that the ink composition has at 25°C a viscosity of 1.5 to 25 mPa.s, a resistivity of less than 4000 ohm-cm, and a velocity of sound between 800 and 2,500 meters per second, and the ink composition comprising (A) 10 to 70% by weight of an epoxy resin selected from (i) diglycidyl ethers of bisphenol A, said resin being predominantly the monomer thereof, (ii) polyepoxidized phenol or cresol novolacs, (iii) diepoxide ethers or esters having two epoxy cycloalkyl groups, (iv) polyglycidyl ethers of polyhydric alcohols, and (v) combinations thereof, the said epoxy resins being liquid at room temperature or having a Durran melting point of less than 100°C, and having an epoxy equivalent weight of less than 300; (B) 1 to 12% by weight of a photoinitiator, capable of rapidly polymerizing the epoxy resins which provides a Lewis acid effective to initiate said polymerization reaction upon exposure to a source of radiation such as ultra-violet light; (C) less than 2% by weight of a colorant that does not adversely affect cure of the epoxy resins; and (D) a solvent blend containing solvents selected from aliphatic alcohols having one to five carbon atoms, alkyl ketones having two to five carbon atoms, aromatic hydrocarbons of benzene, toluene and xylene, propylene carbonate, ethylene glycol ethers having three or four carbon atoms, alkyl acetates having two to four carbon atoms, and combinations of these solvents, the solvent blend being volatile at ambient conditions.

US 4,680,368 discloses an ultraviolet curable ink composition comprising, as main components, (A) a polyurethane poly(meth)acrylate obtained by reacting a polyisocyanate compound of the formula: 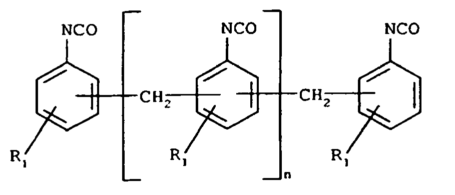 wherein R₁ is a hydrogen atom or a methyl group, and n is an integer of from 1 to 20, with a hydroxyl group-containing (meth)acrylate, and having, in one molecule, at least two (meth)acryloyl groups and at least two urethane bonds, (B) a radical polymerizable low molecular weight compound, and (C) a photopolymerization initiator.

US 4,978,969 discloses a method for printing comprising the steps of: providing printing means for delivering ink to a substrate, said printing means comprising a thermal ink jet printing apparatus; supplying said thermal ink jet printing apparatus with an ultra-violet curable ink composition comprising in combination about 12-80% by weight ultra-violet curable adhesive, about 3-10% by weight dye pigment, and about 10-40% by weight solvent; delivering said ink composition from said thermal ink jet printing apparatus to said substrate; and applying ultra-violet light to said substrate with said ink composition thereon in an amount sufficient to form a permanent image on said substrate from said ink composition.

EP-A 0 465 039 discloses an optionally UV-A light-curable ink-jet ink comprising a colourant, a polar conductive component and as a major component of the liquid phase, one or more polymerizable monomers in which the conductive component is soluble.

EP-A 0 540 203 discloses an optionally UV-A light-curable nonconductive ink comprising a colourant and as a major component of the liquid phase, one or more polymerizable monomers.

US 5,270,368 discloses an ink composition for use in ink jet printing comprising: a) a resin composition comprising at least two acrylate resin components, a first acrylate resin component being an aromatic acrylate resin that contains at least one pendant carboxyl group and a second resin acrylate component being an acrylated epoxy monomer or dimer; b) a photoinitiator; and c) an organic carrier.

EP-A 0 658 607 discloses an ink comprising a pigment, a water-soluble resin, a water-soluble monomer to be set by application of energy and a photopolymerization initiator in an aqueous liquid medium.

US 5,623,001 discloses an ultraviolet radiation curable ink-jet ink composition comprising in combination: a) water, said water content being between about 20% and 75% by weight; b) a water miscible ultra-violet curable polymerizable material; c) a photoinitiator; and d) a colorant, wherein the viscosity of said ink-jet ink composition is between about 2-40 centipoise.

US 5,641,346 discloses a ink-jet ink comprising a colorant and a liquid component comprising water and at least one compound selected from the group consisting of epoxies and vinyl ethers.

WO 97/31071 discloses a radiation-curable ink jet composition comprising from 80% to 95% of a polyfunctional alkoxylated and/or polyfunctional polyalkoxylated acrylate monomer material; and a photoinitiator.

US 6,110,987 discloses a photocurable composition comprising (A) 100 parts by weight of a compound with an ethylenically unsaturated bond, (B) 0.001-5 parts by weight of a cationic dye with absorptions in the visible light region of 400-740 nm, represented by general formula (1) : D⁺A₁⁻ (1) wherein D⁺ is a cationic dye with absorptions in the visible light region of 400-740 nm and A₁⁻ is an anion, (C) 0.005-10 parts by weight of a quaternary boron salt sensitizer represented by general formula (2): 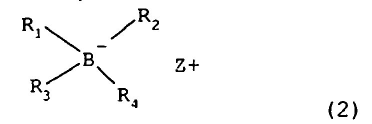 wherein R₁, R₂, R₃ and R₄ each independently represent an alkyl group which may have a substituent, an aryl group which may have a substituent, an allyl group which may have a substituent, an aralkyl group which may have a substituent, an alkenyl group which may have a substituent, an alkynyl group which may have a substituent, a silyl group which may have a substituent, a heterocyclic group or a halogen atom, and Z⁺ represents a quaternary ammonium cation, quaternary pyridinium cation, quaternary quinolinium cation, phosphonium cation, sulfonium cation, oxosulfonium cation, iodonium cation or metal cation, and (D) 0.01-10 parts by weight of an ultraviolet radical polymerization initiator which generates radicals upon absorption of light of wavelength 200-400 nm, wherein the ultraviolet radical polymerization initiator is a compound represented by general formula (9): 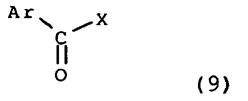 wherein Ar represents an aryl group which may have a substituent, and X represents a phosphinoyl group with a substituent. US 6,110,987 further discloses among other monomers which may be used in the photocurable composition: (meth)acrylic polyfunctional polyorganosilsesquioxanes.

EP-A 1 302 499 discloses an active energy beam-curable composition comprising: a photo-cationic polymerizable substance; a photo-cationic polymerization initiator; and an oxetane compound.

EP-A 1 302 499 specifically discloses oxetanyl silsesquioxane.

US 6,270,561 discloses a hot melt ink composition comprising in combination: (a) a polyhedral silsesquioxane compound present in a proportion of about 0.1 to 30 wt % based on the total weight of the hot melt ink composition; (b) an ink colorant; (c) a resin; (d) a tackifier; (e) a viscosity modifier.

US 6,461,419 discloses a cure-on-demand curable ink composition comprising a shelf stable homogeneous mixture of: at least one of: (a) a compound having 2 reactive silyl groups, and (b) a compound having at least 3 reactive silyl groups; acid generating catalyst comprising an onium salt; and pigment or pigment chip, whereby "curable" means that either reactive silyl groups hydrolyze in the presence of moisture to form compounds having silanol groups that react in the presence of an activated catalyst to form -Si-O-Si- linkages or silanol groups react in the presence of an activated catalyst to form -Si-O-Si- linkages. These moisture-curable compositions cure in the presence of moisture to form crosslinked materials, the moisture being obtained from the atmosphere, from the substrate, or it may be added to the composition.

WO 03/052014 discloses a structured hydrophobic surface with bumps and depressions, characterized in that the surface exhibits polyhedric oligomeric silicon-oxygen cluster units, which form, at least partially, the bumps. WO 03/052014 further discloses a structured hydrophobic surface characterized in that the polyhedric oligomeric silicon-oxygen cluster units are completely condensed silasesquioxanes represented by the formula R₈Si₈O₁₂ with structure I 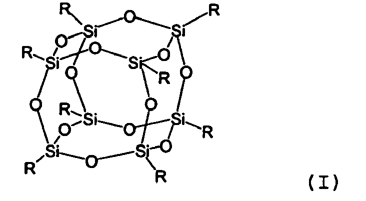 wherein the group R is the same or different and is hydrogen or a substituted or unsubstituted alkyl, cycloalkyl, alkenyl, cycloalkenyl, alkinyl, cycloalkinyl, aryl or heteroaryl group.

Summarizing, a radiation curable ink composition may in general contain one or more radiation curable prepolymers, or oligomers, radiation curable monomers or reactive diluents, optionally one or more photoinitiators, colorants, and other additives. Although polymerizable monomers are in principle suited for achieving the low viscosity needed in ink jet printing, without introducing a significant amount of water or other solvent, it is a problem to find monomers that are suitable for use both in free radically and cationically radiation curable inks.

### ASPECTS OF THE INVENTION

It is an aspect of the present invention to provide novel radiation curable ink compositions.

It is another aspect of the present invention to provide novel radiation curable ink compositions that can be cured free radically and/or cationically.

It is a further aspect of the present invention to provide radiation curable inks for ink jet printing that can be cured free radically and/or cationically.

These and other aspects of the present invention will become apparent from the description hereinafter.

### SUMMARY OF THE INVENTION

Surprisingly it has been found that radiation curable ink compositions comprising at least one polyhedral oligomeric silsesquioxane (POSS) characterized in that said silsesquioxane is selected from the group as described in claim 1 can be cured free radically and/or cationically.

Aspects of the present invention are realised by a radiation curable ink composition comprising at least one initiator and at least one polyhedral oligomeric silsesquioxane (POSS) characterized in that said silsesquioxane is selected from the group as described in claim 1.

Aspects of the present invention are also.realized by a process for obtaining a colorless, monochrome or multicolour ink jet image comprising the steps of jetting one or more streams of ink droplets having the above-mentioned composition onto an ink-jet ink receiver material, and subjecting the obtained image to radiation curing.

Further aspects and advantages of the invention will become apparent from the description hereinafter.

### DETAILED DESCRIPTION OF THE INVENTION

### Definitions

The term radiation means all forms of electromagnetic and high energy ionizing radiation including IR-light, visible light, UV-light, X-rays, gamma rays, beta rays and accelerated electrons.

The term derivatives as used in connection with a particular polymer refers to variants thereof substituted with alkyl, alkoxy, alkyloxyalkyl, carboxy, alkylsulfonato and carboxy ester groups.

The term heterocyclic as used in disclosing the present invention means cyclic structures consisting of at least four ring atoms at least one of which is not carbon and does not include epoxy groups.

The term photoinitiator includes both cleaving and non-cleaving photoinitiators. Cleaving photoinitiators are capable of generating free radicals independently once exposed to UV light. Non-cleaving photoinitiators require the presence of a hydrogen donor (tertiary amine often referred to as a synergist or co-initiator) to produce free radicals.

The term tackifier as used in disclosing the present invention means an additive to impart adhesive properties to an otherwise non-adhesive material. An examples of a widely used tackifier is Celloyn 21-E, a phthalate ester of technical hydroabietyl alcohol from Eastman.

The term aqueous medium means a medium containing water and water-miscible organic solvents containing between 50% by weight of water and 100% by weight of water.

The term solvent medium means a medium containing organic solvents and may also contain dissolved water in a concentration of less than 50% by weight.

The term colorant includes both dyes and pigments.

The term dye, according to the present invention, means a colouring agent having a solubility of 10 mg/L or more in the medium in which it is applied and under the ambient conditions pertaining.

The term pigment is defined in DIN 55943 as an inorganic or organic, chromatic or achromatic colouring agent that is practically insoluble in the application medium under the pertaining ambient conditions, hence having a solubility of less than 10 mg/L therein.

### Silsesquioxanes

Aspects of the present invention are realised by a radiation curable ink composition comprising at least one initiator and at least one initiator and at least one polyhedral oligomeric silsesquioxane (POSS) characterized in that said silsesquioxane is selected from the group as described in claim 1.

The structures of silsesquioxanes have been reported as random structure, ladder structure, cage structures and partial cage structures and are discussed in more detail, as well as the synthesis and the properties of silsesquioxanes, by R. Baney et al. in *Chemical Review, 1995, 95, 1409-1430* as well as in the references cited therein and by Guizhi Li et al. in *Journal of Inorganic and Organometallic Polymers, Vol. 11 (3), September 2001, page 123-154* as well as in the references cited therein. Silsesquioxanes with specific cage structures have been designated as polyhedral oligomeric silsesquioxanes, POSS. Such cage structures are described in *Journal of Inorganic and Organometallic Polymers, Vol. 11 (3), September 2001, page 124, Scheme 1 (structures c-f).*

Polyhedral oligomeric silsesquioxanes (POSS) have two unique features: (1) the chemical composition (RSiO_{1.5}) is intermediate between that of silica (SiO₂) and silicones (R₂SiO). (2) POSS molecules are physically large, ranging from approximately 1 to 3 nm. This hybrid (organic/inorganic) composition of POSS technology enables it to occupy a unique and dramatically enhanced property space relative to traditional hydrocarbons and inorganics. An important benefit is that it affords the material formulations excellent thermal, mechanical and oxidative stability, as well as flammability resistance. This is largely due to the inorganic core of the POSS molecules. The organic portion of their composition provides improved compatibility with existing resins thereby enabling their facile incorporation into conventional plastics. POSS functionalized monomers according to the present invention possess a hybrid inorganic-organic three-dimensional structure which contains one to eight reactive organic functional groups.

The majority of POSS functionalized monomers contain seven non-reactive organic groups with one unique functionality. By varying the functional group and the seven non-reactive organic groups, a multitude of POSS functionalized monomers can be prepared to meet almost any need. While the monofunctional POSS monomers can be incorporated by copolymerization or grafting, multifunctional POSS monomers can be utilized as effective cross-linkers. POSS functionalized monomers react similarly in polymerization, grafting and cross-linking reactions to standard organic monomers. While they react like simple organic monomers, when incorporated into a polymeric material, POSS functionalized monomers impart significant improvements in the thermal, mechanical, and gas separation properties of traditional plastics.

Silsesquioxanes (POSS) according to the present invention are commercially available from companies such as Hybrid Plastics, Fountain Valley, CA 92708-6117, USA. and are listed in the following Table 1. Compared to the state-of-the-art acrylates and methacrylates used in UV curable inks, the compounds according to the present invention have at least one extra functionality introduced into the molecule, offering new opportunities for ink formulation and for printing on non-absorbent substrates such as metal and ceramic surfaces.

**Table 1**

| | | | |
|---|---|---|---|
| 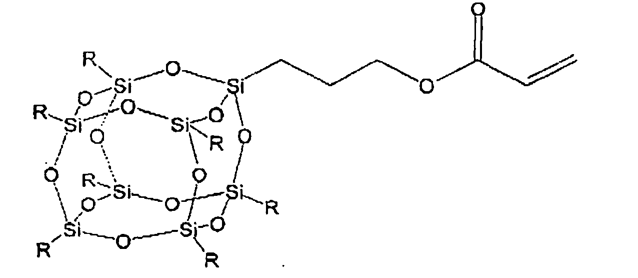 | | | |
| I. 1 | R = cyclohexyl (MA0699) | I. 3 | R = isobutyl (MA0701) |
| I. 2 | R = cyclopentyl (MA0700) | | |
| 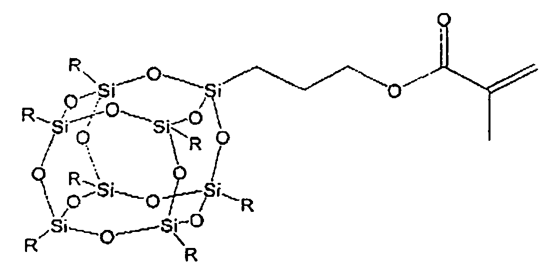 | | | |
| I. 4 | R = cyclohexyl (MA0704) | I. 7 | R = isobutyl (MA0702) |
| I. 5 | R = cyclopentyl (MA0705) | I. 8 | R = isooctyl (MA0719) |
| I. 6 | R = ethyl (MA0717) | I. 9 | R = phenyl (MA0734) |
| 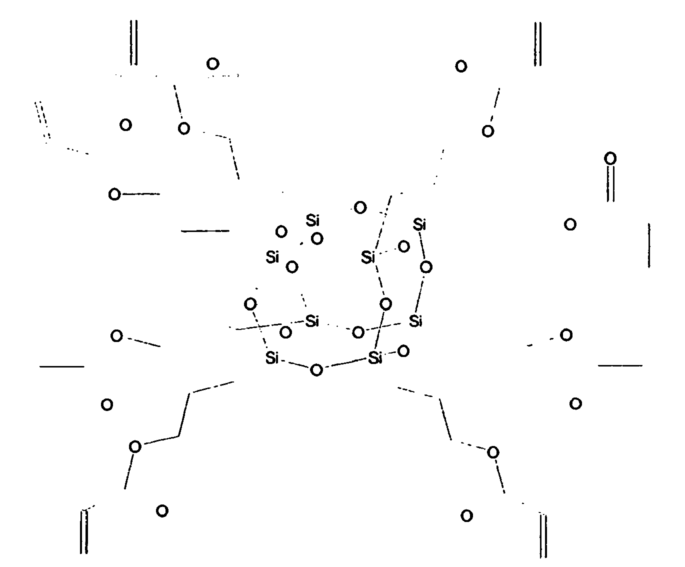 | | | |
| | I. 10 (MA0735) | | |
| 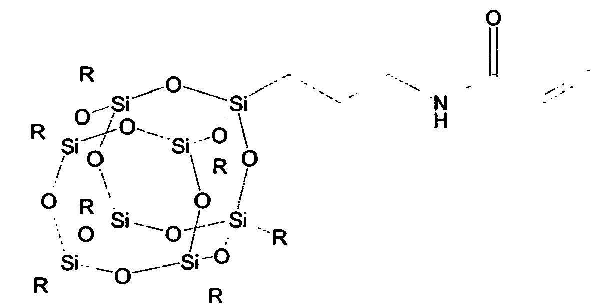 | | | |
| I. 11 | R = cyclohexyl | I. 13 | R = isobutyl |
| I. 12 | R = cyclopentyl | | |
| 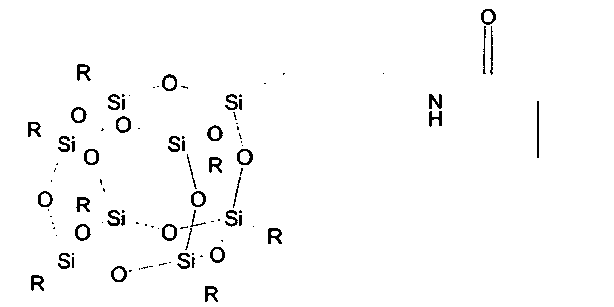 | | | |
| I. 14 | R = cyclohexyl | I. 17 | R = isobutyl |
| I. 15 | R = cyclopentyl | I. 18 | R = isooctyl |
| I. 16 | R = ethyl | I. 19 | R = phenyl |
| 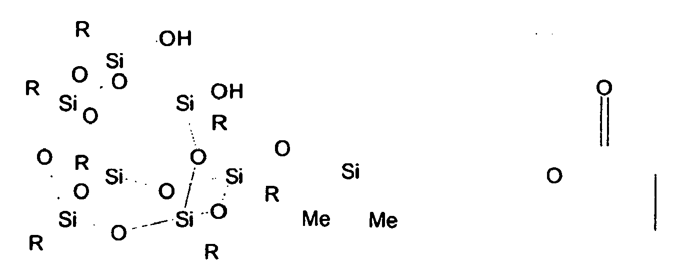 | | | |
| I. 20 | R = cyclohexyl (MA0715) | I. 22 | R = isobutyl (MA0713) |
| I. 21 | R = cyclopentyl (MA0711) | | |
| 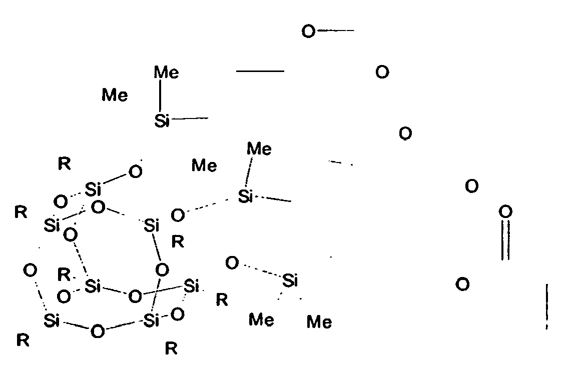 | | | |
| I. 23 | R = cyclohexyl (MA0747) | I. 24 | R = isobutyl (MA0750) |
| 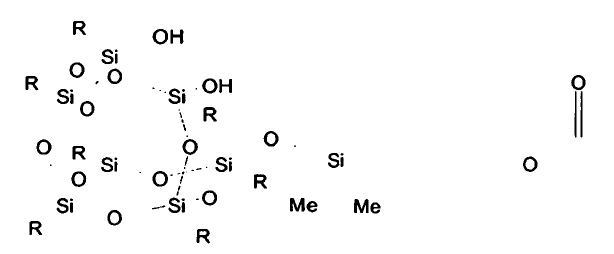 | | | |
| I. 25 | R = cyclohexyl (MA0715) | I. 27 | R = isobutyl (MA0713) |
| I. 26 | R = cyclopentyl (MA0711) | | |
| 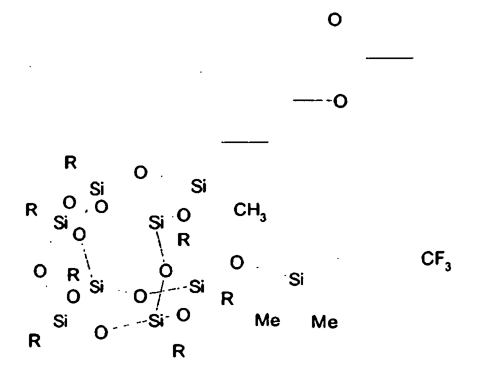 | | | |
| I. 28 | R = cyclopentyl (MA0720) | | |
| 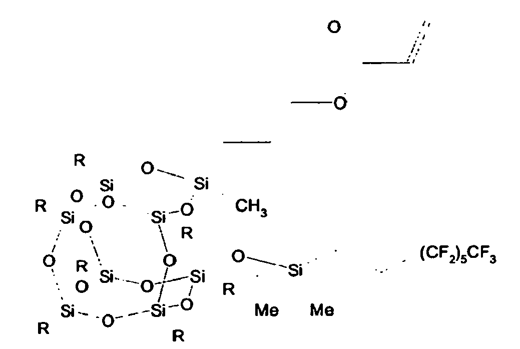 | | | |
| I. 29 | R = cyclopentyl (MA0730) | | |
| 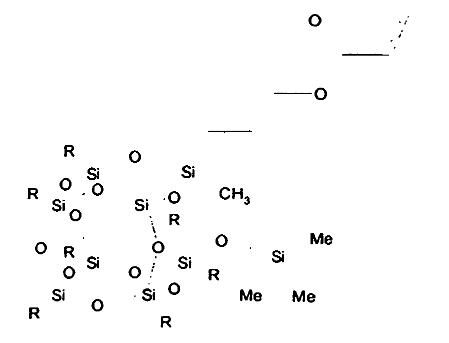 | | | |
| I. 30 | R = cyclopentyl (MA0740) | I. 31 | R = isobutyl (MA0742) |
| 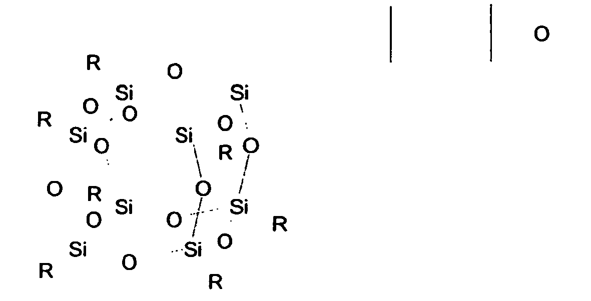 | | | |
| I**.** 32 | R = cyclohexyl (EP0399) | I. 34 | R = isobutyl (EP0402) |
| I. 33 | R = cyclopentyl (EP0400) | | |
| 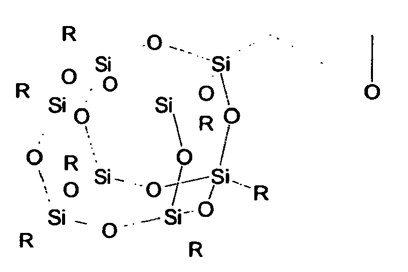 | | | |
| I. 35 | R = cyclohexyl R | I. 37 | R = isobutyl (EP0414) |
| I. 36 | R = cyclopentyl (EP0410) | | |
| 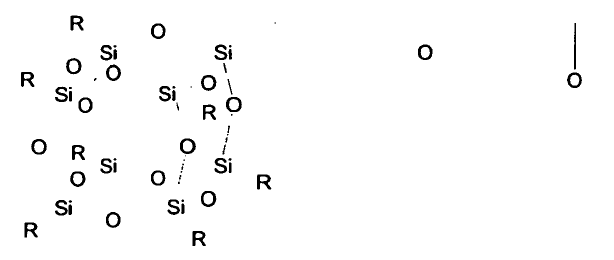 | | | |
| I. 38 | R = cyclohexyl (EP0415) | I. 41 | R = ethyl (EP0417) |
| I. 39 | R = cyclopentyl (EP0416) | I. 42 | R = isooctyl (EP0419) |
| I. 40 | R = isobutyl (EP0418) | I. 43 | R = phenyl (EP0425) |
| 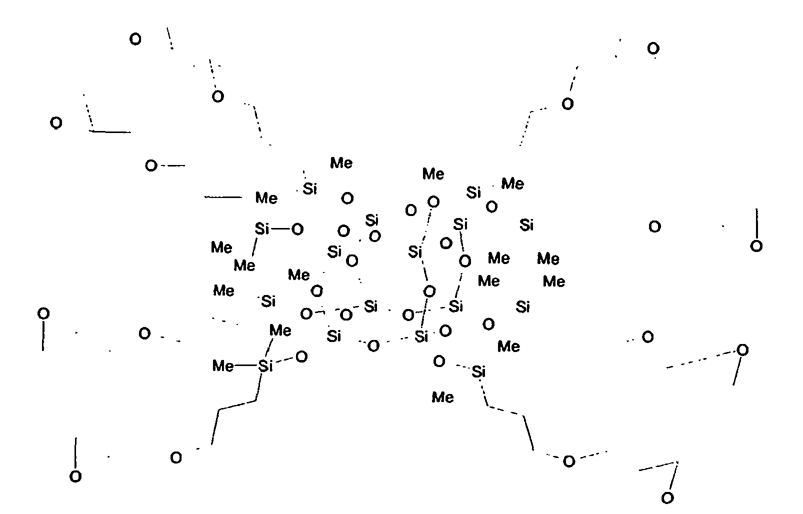 | | | |
| | I. 44 (EP0435) | | |
| 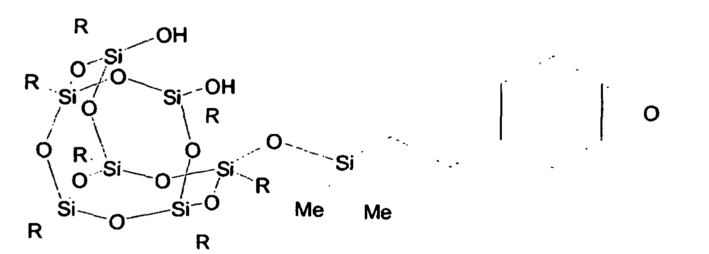 | | | |
| I. 45 | R = isobutyl (EP0407) | | |
| 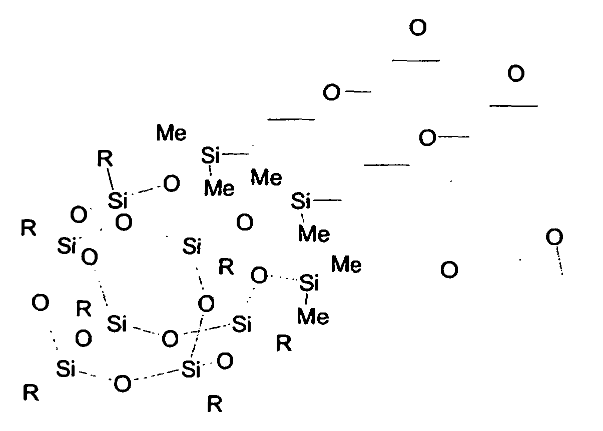 | | | |
| I. 46 | R = cyclohexyl (EP0421) | I. 48 | R = isobutyl (EP0423) |
| I. 47 | R = cyclopentyl (EP0420) | I. 49 | R = ethyl (EP0422) |
| 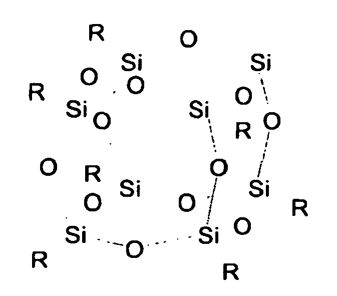 | | | |
| I. 50 | R = cyclohexyl (OL1099) | I. 52 | R = isobutyl (OL1118) |
| I. 51 | R = cyclopentyl (OL1100) | | |
| 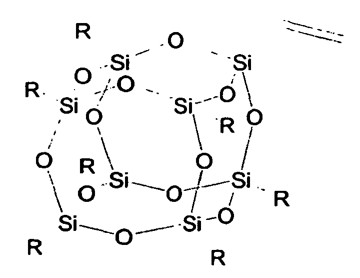 | | | |
| I. 53 | R = cyclohexyl (OL1122) | I. 55 | R = isobutyl (OL1123) |
| I. 54 | R = cyclopentyl (OL1120) | | |
| 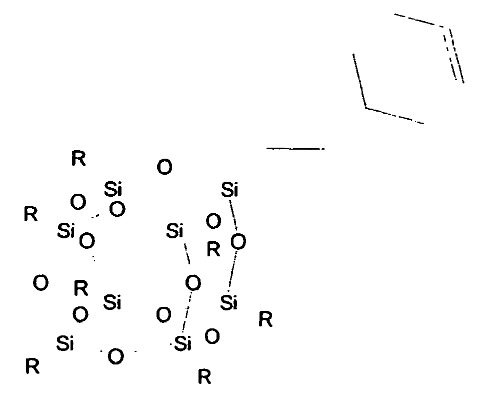 | | | |
| I. 56 | R = cyclopentyl (OL1110) | | |
| 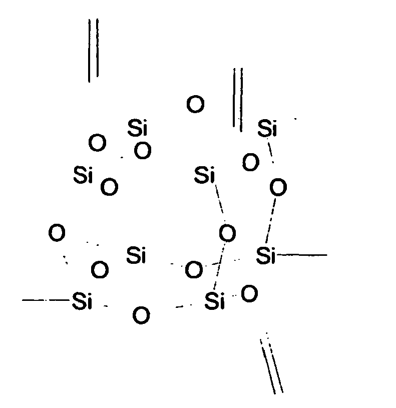 | | | |
| | I. 57 (OL1160) | | |
| 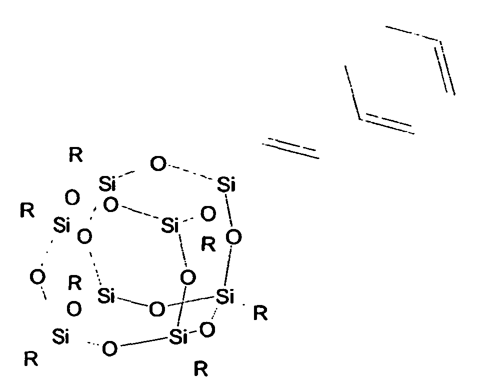 | | | |
| I. 58 | R = isobutyl (ST1506) | | |
| 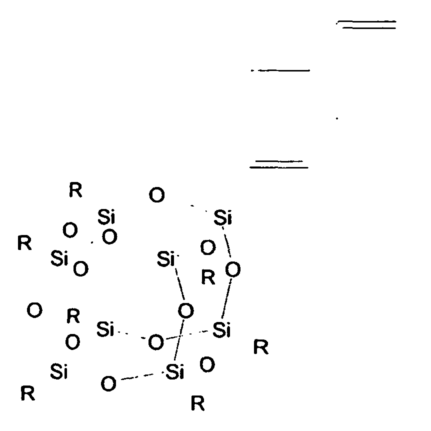 | | | |
| I. 59 | R = cyclohexyl (ST1509) | I. 61 | R = isobutyl (ST1515) |
| I. 60 | R = cyclopentyl (ST1510) | | |

A wide variety of monomers suitable for use in the radiation curable ink compositions, according to the present invention, can be prepared according to synthetic methods described in US 6,100,417, US 5,942,638, US 5,939,576, US 5,589,562, US 5,484,867, and US 5,412,053, in the above mentioned reviews published by R. Baney et al. in *Chemical Review, 1995, 95, 1409-1430 and by Guizhi Li et al. in Journal of Inorganic and Organometallic Polymers, Vol. 11 (3), September 2001, page 123-154.* Furthermore, many of the monomers are available from Hydrid Plastics Inc., Fountain Valley, California, USA (see codes given in brackets).

### Initiators

According to a preferred embodiment of the radiation curable ink composition, according to the present invention, the initiator is a photoinitiator.

Photoinitiators can be divided in compounds that are suitable for cationic polymerization, compounds suitable for free radical polymerization and compounds which depending upon the conditions initiate free radical and/or cationic polymerization.

Information about suitable photoinitiators is to be found in: P.K.T. Oldring (ed.), "Chemistry and Technology of UV and EB Formulation for Coatings, Inks and Paints: Vol. 3 "Photoinitiators for Free Radical and Cationic Polymerization," SITA Technology Ltd., London, UK (1991); N.S. Allen, "Photoinitiators for UV and visible curing of coatings: mechanism and properties", *Journal of Photochemistry and Photobiology, A: Chemistry* 100 (1996) 101-107; J.V. Koleske, "A radiation-cure primer", *Journal of Coatings Technology,* Vo169, No. 866, March 1997, 29-38.

Disclosures specific on photoinitiators for cationic poymerisation include : J.V. Crivello, "The Chemistry of Photoacid Generating Compounds", Proceedings of the ACS Division of Polymeric Materials: *Science and Engineering,* Vol. 61, pages 62-66, (1989); J.V. Crivello and J.H.W. Lam, "Complex Triarylsulfonium Salt Photoinitiators I. The Identification, Characterization, and Synthesis of a New Class of Triarylsulfonium Salt Photoinitiators," *Journal of Polymer Science, Polymer Chemistry Edition,* Vol. 18, 2677-2695 (1980); J.V. Crivello and J.H.W. Lam, "Complex Triarylsulfonium Photoinitiators II. The Preparation of Several New Complex Triarylsulfonium salts and the Influence of Their Structure in Photoinitiated Cationic Polymerization," *Journal of Polymer Science, Polymer Chemistry Edition,* Vol. 18, pages 2697-2714 (1980); J.V. Crivello and J.H.W. Lam, "Diaryliodonium Salts A New Class of Photoinitiators for Cationic Polymerization," *Macromolecules,* Vol. 10, pages 1307-1315 (1977); and J.V. Crivello, J.L. Lee and D.A. Conlon, "Developments in the Design and Applications of Novel Thermal and Photochemical Initiators for Cationic Polymerization", *Makromol. Chem. Macromolecular Symposium,* Vol. 13/14, pages 134-160 (1988) .

According to a preferred embodiment of the radiation curable ink composition, according to the present invention, the radiation curable ink further contains a photoinitiator selected from the group consisting of optionally alkyl and/or aryl substituted diaryl iodonium salts and their derivatives, optionally alkyl and/or aryl substituted triaryl sulfonium salts and their derivatives, and optionally alkyl and/or aryl substituted triphenyl phosphonium salts and their derivatives.

Further suitable photoinitiators for cationic polymerization are triarylsulphonium-tetrakis(pentafluorophenyl)-borate (RHODORSIL 2074 supplied by Rhone-Poulenc Chimie) described by C. Priou et al. in the Conference Proceedings of Radtech Europe '97, p. 314, and onium salts with specific light absorption characteristics as disclosed in WO 97/47660.

Suitable photoinitiators for free radical polymerization include LUCIRIN LR8953 (from BASF), IRGACURE 819 and 907 (from Ciba-Geigy), DAROCUR 4865 (from Ciba-Geigy), and isopropylthioxanthones, e.g. QUANTACURE ITX (from Rahn AG). Useful polymeric or oligomeric photoinitiators for free radical polymerization are copolymerizable photoinitiators such as discussed by M. Visconti et al. and W. Davies at al. in Conference papers 6 and 7 respectively, of the Radcure Coatings and Inks, Curing and Performance Conference (Harrogate, 22-23 June 1998). Examples of such photoinitiators are e.g. ESACURE KIP150, ESACURE KT 37 and KT 55 (from Lamberti), and acrylated IRGACURE 2959 or IRGACURE 2959 modified melamine acrylate (ex Ackros Chemicals). Further suitable initiators are disclosed in following patents : US 4,683,317, US 4,378,277, US 4,279,717, US 4,480,368, US 4,443,495, US 4,303,924, US 4,751,102, US 4,334,970, US 5,270,368, US 5,395,724, EP-A 0 540 203, EP-A 0 568 607 and EP-A 0 659 039.

According to a preferred embodiment of the radiation curable ink composition, according to the present invention, the initiator is a photoinitiator and the radiation curable ink further contains a co-initiator, also called initiator synergist. The initiator synergist is preferably of the amine type, e.g. the aminobenzoate type. According to a preferred embodiment of the radiation curable ink composition, according to the present invention, the radiation curable ink further contains an aminobenzoate-type co-initiators with a primary photoinitiator selected from the group consisting of benzophenone and xanthone/thioxanthone compounds. More examples can be found in the Oldring reference cited above. Apart from curing with UV-light, visible light curing systems can also be used, using for example the camphoroquinone dimethylaminoethylmethacrylate (DMAEMA) system.

According to a preferred embodiment of the radiation curable ink composition, according to the present invention, the radiation curable ink further contains a photoinitiator in an amount from 0.2 to 20 % by weight of the ink and preferably between 1 and 10 % by weight of the ink composition.

According to a preferred of the radiation curable ink composition, according to the present invention, the radiation curable ink further contains a co-initiator in an amount from 0.2 to 20 % by weight of the ink and preferably between 1 and 10 % by weight of the ink composition.

### Colorants

According to a preferred embodiment of the radiation curable ink composition, according to the present invention, the radiation curable ink further contains at least one colorant. Any colorant may be used to impart the desired colour to the ink.

According to a preferred embodiment of the radiation curable ink composition, according to the present invention, the radiation curable ink further contains at least one dye.

According to a preferred embodiment of the radiation curable ink composition, according to the present invention, the radiation curable ink further contains at least one pigment.

According to a preferred embodiment of the radiation curable ink composition, according to the present invention, the radiation curable ink further contains at least one inorganic pigment.

According to a preferred embodiment of the radiation curable ink composition, according to the present invention, the radiation curable ink further contains at least one colorant and the colorant is a dispersed pigment or a solid solution of a pigment.

According to a preferred embodiment of the radiation curable ink I composition, according to the present invention, the radiation curable ink further contains a combination of at least one pigment and at least one dye. A wide variety of organic and inorganic dyes and pigments, alone or in combination may be selected for use in the ink compositions of this invention. The pigment particles should be sufficiently small to permit free flow of the ink through the ink jet printing device, especially at the ejecting nozzles that usually have a diameter ranging from 10 µm to 50 µm. The pigment particle size also has an influence on the pigment dispersion stability, which is critical throughout the life of the ink. It is also desirable to use small particles for maximum colour strength.

According to a preferred embodiment of the radiation curable ink composition, according to the present invention, the radiation curable ink further contains at least one pigment having an average particle diameter of 5 nm to 15 µm, preferably, from 5 nm to 5 µm, more preferably from 5 nm to 1 µm, and particularly preferably from 5 nm to 300 nm. Pigment particle sizes outside these ranges may, of course, be used as long as the objectives of the present invention are achieved.

Very fine dispersions of pigments and methods for their preparation are disclosed in e.g. EP 0 776 952, US 5,538,548, US 5,443,628, EP 0 259 130, US 5,285,064, EP 0 429 828, and EP 0 526 198.

The pigment can be black, cyan, magenta, yellow, red, blue, green, brown, mixtures thereof, and the like. Suitable carbon black pigment include Regal 400R, Mogul L, Elftex 320 from Cabot Co., or Carbon Black FW18, Special Black 250, Special Black 350, Special Black 550, Printex 25, Printex 35, Printex 55, Printex 150T from Degussa Co., and Pigment Black 7. Suitable non-carbon black pigments include C. I. Pigment Yellow 17, C. I. Pigment Blue 27, C. I. Pigment Red 49:2, C. I. Pigment Red 81:1, C. I. Pigment Red 81:3, C. I. Pigment Red 81:x, C. I. Pigment Yellow 83, C. I. Pigment Red 57:1, C. I. Pigment Red 49:1, C. I. Pigment Violet 23, C. I. Pigment Green 7, C. I. Pigment Blue 61, C. I. Pigment Red 48:1, C. I. Pigment Red 52:1, C. I. Pigment Violet 1, C. I. Pigment White 6, C. I. Pigment Blue 15, C. I. Pigment Yellow 12, C. I. Pigment Blue 56, C. I. Pigment Orange 5, C. I. Pigment Black 7, C. I. Pigment Yellow 14, C. I. Pigment Red 48:2, C. I. Pigment Blue 15:3, C. I. Pigment Yellow 1, C. I. Pigment Yellow 3, C. I. Pigment Yellow 13, C. I. Pigment Orange 16, C. I. Pigment Yellow 55, C. I. Pigment Red 41, C. I. Pigment Orange 34, C. I. Pigment Blue 62, C. I. Pigment Red 22, C. I. Pigment Red 170, C. I. Pigment Red 88, C. I. Pigment Yellow 151, C. I. Pigment Red 184, C. I. Pigment Blue 1:2, C. I. Pigment Red 3, C. I. Pigment Blue 15:1, C.I. Pigment Blue 15:3, C.I. Pigment Blue 15:4, C. I. Pigment Red 23, C. I. Pigment Red 112, C. I. Pigment Yellow 126, C. I. Pigment Red 169, C. I. Pigment Orange 13, C. I. Pigment Red 1-10, 12, C.I. Pigment Blue 1:X, C.I. Pigment Yellow 42, C.I. Pigment Red 101, C.I. Pigment Brown 6, C. I. Pigment Brown 7, C. I. Pigment Brown 7:X, C. I. Pigment Black 11, C. I. Pigment Metal 1, C. I. Pigment Metal 2, C.I. Pigment Yellow 128, C.I. Pigment Yellow 93, C.I. Pigment Yellow 74, C.I. Pigment Yellow 138, C.I. Pigment Yellow 139, C.I. Pigment Yellow 154, C. I. Pigment Yellow 185, C.I. Pigment Yellow 180, C.I. Pigment Red 122, C.I. Pigment Red 184, bridged aluminum phtalocyanine pigments and solid solutions of pigments.

Suitable pigments are also those disclosed in *Industrial Organic Pigments, Production, Properties, Applications,* second edition, W. Herbst, K. Hunger ; VCH, 1997. Additional examples of suitable pigments are disclosed in US 5,389,133.

According to a preferred embodiment of the radiation curable ink composition, according to the present invention, the radiation curable ink further contains at least one pigment selected from the group consisting of Pigment Yellow 1, 3, 128, 109, 93, 17, 14, 10, 12, 13, 83, 65, 75, 74, 73, 138, 139, 154, 151, 180, 185; Pigment Red 122, 22, 23, 17, 210, 170, 188, 185, 146, 144, 176, 57:1, 184, 202, 206, 207; Pigment Blue 15:3, Pigment Blue 15:2, Pigment Blue 15:1, Pigment Blue 15:4, Pigment Blue 15:6, Pigment Blue 16; and carbon black.

The pigment may or may not be used in the form of a dispersion comprising a dispersant also called a pigment stabilizer. Suitable dispersants include dispersants of the polyester, polyurethane or polyacrylate type, especially in the form of high molecular weight block copolymer, and would typically be incorporated at a concentration of 2.5% to 100% by weight of the pigment. Suitable dispersants include DISPERBYK types (from BYK Chemie) and SOLSPERSE types (from Zeneca). A detailed list of suitable non-polymeric as well as some polymeric dispersants is to be found in McCutcheon's Functional Materials, North American Edition, Manufacturing Confectioner Publishing Co., Glen Rock, N.J., pp. 110-129 (1990). Further suitable pigment stabilizers are disclosed in DE 19636382, US 5,720,802, US 5,713,993, PCT/GB95/02501, US 5,085,689 and GB 2303376.

According to a preferred embodiment of the radiation curable ink composition, according to the present invention, the radiation curable ink further contains 0.5 to 20 percent by weight of pigments in the ink composition.

According to a preferred embodiment of the radiation curable ink composition, according to the present invention, the radiation curable ink further contains 0.5 to 20 percent by weight of dyes in the ink composition.

According to a preferred embodiment of the radiation curable ink composition, according to the present invention, the radiation curable ink further contains 0.5 to 20 percent by weight of colorants in the ink composition.

### Other monomers, oligomers or reactive diluents usable in combination with the invention monomers

According to a preferred embodiment of the radiation curable ink composition, according to the present invention, the radiation curable ink further contains at least one photopolymerizable compound.

According to a preferred embodiment of the radiation curable ink composition, according to the present invention, the radiation curable ink further contains at least one photocrosslinkable compound.

A wide variety of photopolymerisable and photocrosslinkable compounds can be used in combination with the monomers of the present invention in the radiation curable ink composition, according to the present invention.

Suitable photopolymerizable compounds include the monomers disclosed in DE-A 4005231, DE-A 3516256, DE-A 3516257, DE-A 3632657, US 4,629,676, US 6,294,592, WO 97/31071 and US 6,300,388.

According to a preferred embodiment of the radiation curable ink composition, according to the present invention, the radiation curable ink further contains at least one photopolymerizable compound selected from the group consisting of vinylether methacrylates and vinylether acrylates, such as disclosed in US 6,310,115. Representative examples of such compounds are given in Table 2

**Table 2. Vinylether(meth)acrylates**

| | |
|---|---|
| II.1 | 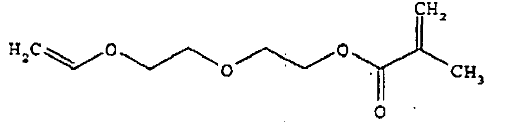 |
| II.2 | 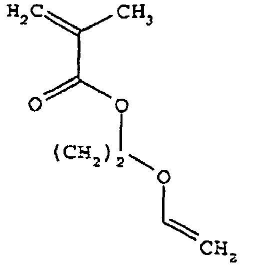 |
| II.3 | 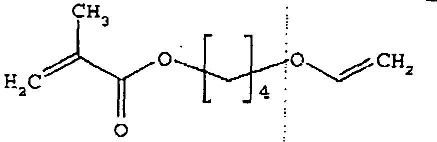 |
| II.4 | 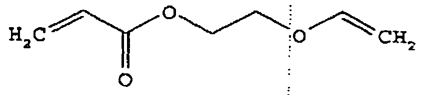 |
| II.5 | 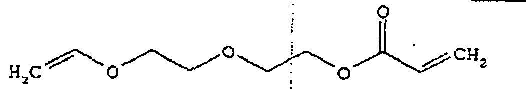 |
| II.6 | 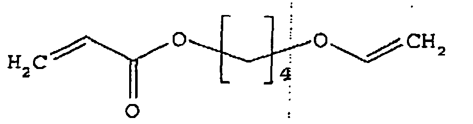 |

According to a preferred embodiment of the radiation curable ink composition, according to the present invention, the radiation curable ink further contains at least one photopolymerizable compound selected from the group consisting:

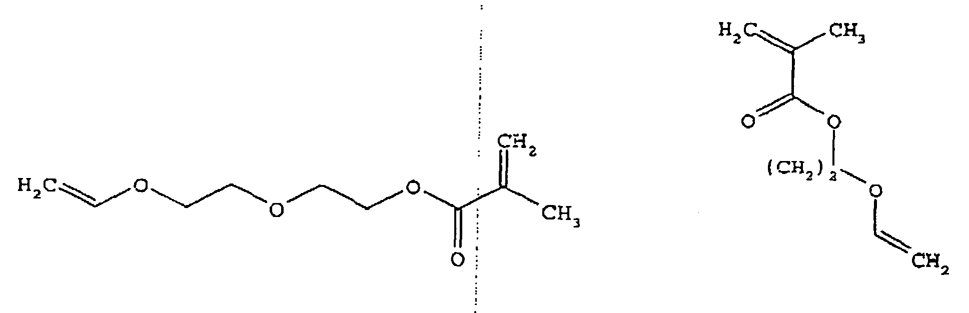

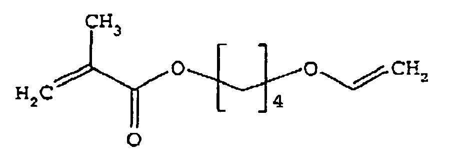

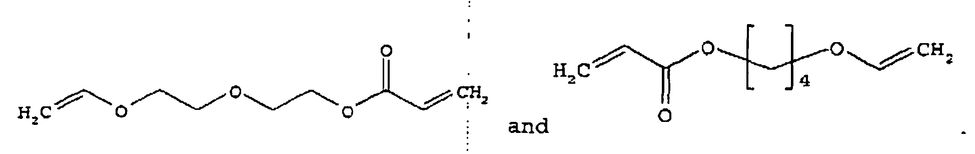

According to a preferred embodiment of the radiation curable ink composition, according to the present invention, the radiation curable ink further contains at least one polymer.

According to a preferred embodiment of the radiation curable ink composition, according to the present invention, the radiation curable ink further contains at least one prepolymer comprising one or more polymerizable functions.

According to a preferred embodiment of the radiation curable ink composition, according to the present invention, the radiation curable ink further contains at least one oligomer comprising one or more polymerizable functions.

According to a preferred embodiment of the radiation curable ink composition, according to the present invention, the radiation curable ink further contains at least one reactive diluent comprising one or more polymerizable functions.

According to a preferred embodiment of the radiation curable ink composition, according to the present invention, the radiation curable ink further contains a second photopolymerizable monomer, oligomer or prepolymer.

According to a preferred embodiment of the radiation curable ink composition, according to the present invention, the radiation curable ink further contains a second photopolymerizable monomer, which is selected from the group consisting of amino modified polyether acrylates, urethane acrylates, polyester acrylates, polyether acrylates, and epoxy acrylates.

Suitable prepolymers and reactive diluents for use in radiation curable compositions such as the ink composition of the present invention may be selected from the group consisting of unsaturated urethane(meth)acrylates, epoxy(meth)acrylates, polyolacrylates, polyether(meth)acrylates and polyester(meth)acrylates as described e.g. in "Chemistry & Technology of UV and EB formulation for coatings, inks and paints" Vol.2 : Prepolymers and Reactive diluents for UV and EB curable formulations." Ed. G. WEBSTER - SITA Technology - London (1996) and in the periodical "Coating" 9/88, p. 348-353.

Other suitable prepolymers and oligomers belong to the class of aliphatic and aromatic polyester-urethane acrylates. The structure of polyester-urethane acrylates is given in the booklet "Radiation Cured Coatings" by John R. Constanza, A.P. Silveri and Joseph A. Vona, published by Federation of Societies for Coatings Technology, 1315 Walnut St. Philadelphia, PA 19107 USA (June 1986) p. 9. It will be clear that all these cited monomers, prepolymers, polymers and oligomers can be used in admixture.

A preferred second oligomer used in combination with a monomer of the present invention is an amino modified polyether acrylate known as CN 501 from Cray Valley Co..

In a particular embodiment the second monomer, oligomer or prepolymer not belonging to the invention is the principal compound involved in the radiation curing, and the monomer according to the invention functions as so-called "reactive diluent" in order to reduce the viscosity of the final ink formulation.

### Other additives

According to a preferred embodiment of the radiation curable ink composition, according to the present invention, the radiation curable ink composition further contains water as a solvent.

According to a preferred embodiment of the radiation curable ink composition, according to the present invention, the radiation curable ink composition further contains water and/or at least one organic solvent.

Suitable organic solvents include alcohols, fluorinated solvents and dipolar aprotic solvents. Preferable solvents are methanol, ethanol, propanol, 1-butanol, 1-pentanol, 2-butanol, t.-butanol, glycol, glycolethers, N-methylpyrrolidone, N,N-dimethylacetamid, N, N-dimethylformamid, 2,4-pentanedione and hexafluoroacetone.

According to a preferred embodiment of the radiation curable ink composition, according to the present invention, the radiation curable ink composition is exclusive of a tackifier.

According to a preferred embodiment of the radiation curable ink composition, according to the present invention, the radiation curable ink further contains at least one conducting or semiconducting polymer.

According to a preferred embodiment of the radiation curable ink composition, according to the present invention, the radiation curable ink further contains at least one conducting or semiconducting polymer selected from the group consisting of substituted polyanilines, unsubstituted polyanilines, polypyrroles, substituted polythiophenes [such as poly(ethylenedioxythiophene) (PEDOT)], unsubstituted polythiophenes, substituted poly(phenylenevinylenes) [such as MEH-PPV], unsubstituted poly(phenylenevinylenes) [such as PPV], and polyfluorenes [such as PF6].

According to a preferred embodiment of the radiation curable ink composition, according to the present invention, the radiation curable ink further contains at least one antioxidant.

The radiation curable ink compositions, according to the present invention, may also include one or more additives such as biocides, buffering agents, anti-mould agents, pH adjustment agents, electric conductivity adjustment agents, chelating agents, anti-rusting agents, polymerisation inhibitors, light stabilizers, antioxidants and surfactants, photoinitiator stabilizers. Such additives may be included in the ink jet inks of the present invention in any effective amount, as desired.

Suitable pH controlling agents include, but are not limited to, acids, and bases, including hydroxides of alkali metals such as lithium hydroxide, sodium hydroxide and potassium hydroxide. The amount included will depend, of course, on the specific component being included.

Suitable photoinitiator stabilizers include those disclosed in EP 0 465 039. Preferred surfactants are of the non-ionic type, for example FLUORAD FC430 (from 3M Corp.). Such surfactants when present are preferably included in an amount of 0.1% to 10% by weight of the total ink composition.

### Dendrimers

According to a preferred embodiment of the radiation curable ink composition, according to the present invention, the radiation curable ink further comprises a dendrimer.

Dendrimers are radially symmetrical molecules of a STARBURST^{™}. topology comprised of an initiator core, such as nitrogen, ethyleneimine, and the like, interior layers attached to the core and comprised of a suitable number of arms, for instance, two to four arms, each arm being comprised of repeating units with the number of repeating units in each arm being considered the generation of the dendrimer, and terminal groups functionality, such as, for example, a primary amine attached to the outmost generation, which dendrimers are illustrated, for example, in U.S. Pat. Nos. 4,507,466, 4,631,337, 4,558,120, 4,568,737, and 4,587,329, and in Tomalia et al., *Angewandte Chemie, Int. Ed. Engl.* 29, 138 (1990). The size and shape of the STARBURST^{™} dendrimer molecule and the functional groups present in the dendrimer molecule can be controlled by the choice of the initiator core, the number of generations, and the choice of repeating units employed at each generation.

The choice of the dendrimer components can affect the properties of the dendrimers. The initiator core type can affect the dendrimer shape producing, for example, spheroid-shaped dendrimers, cylindrical- or rod-shaped dendrimers, or ellipsoid-shaped dendrimers. Sequential building of generations determines the dimensions of the dendrimers and the nature of its interior. Examples of suitable core materials include ammonia, polyfunctional alcohols, such as pentaerythritol or tris-(hydroxymethyl)ethane, 1,1,1-tris-(4'-hydroxyphenyl)ethane, polyfunctional amines, such as ethylene diamine, linear polyethyleneimines, and the like. The chemical functionality of the repeating unit in the interior layers can include, for example, amidoamines, such as aminoethyl acetamide, imines, such as diethylene diimine, or ethers like those obtained from materials such as, for example, 3,5-dihydroxyethyl benzyl alcohol. The terminal functionalities include, for example, amino groups, hydroxyl groups, carboxylic acid groups, carboxylates, esters, amides, phosphates, sulfonates, and the like. The synthesis of dendrimers usually occurs by a divergent approach that involves the initial reaction of a monomer with the initiator core, followed by exhaustive reaction of the resulting functional groups with a difunctional compound, such as a diamine, including, for example, ethylene diamine, to afford the next generation of reactive amino groups. Thus, for example, ethylene diamine can be suitably reacted first with methyl acrylate to produce a compound such as N,N,N',N'-tetra(methoxycarbonylethyl)ethylene diamine. The aforesaid compound can be reacted in the next step with ethylene diamine to produce an amidoamine dendrimer having a generation number of zero, a molecular weight of 517, and four primary amino groups at the surface. Repetition of the above two-step procedure leads to subsequent generations.

An alternate synthetic route uses a convergent growth synthesis as described in detail in Hawker et al., *J. Amer. Chem. Soc.*, 112, 7638 (1990).

The dendrimer may have other groups or segments, in addition to amino groups. For instance, the dendrimer may have a dye covalently attached to it, or it may have certain functional groups grafted onto it. Preferred dendrimers for use in the preparation of the ink composition of the present invention include the dendrimers disclosed in US 6,312,679.

The dendrimers may be grafted with, for example, alkylene oxide oligomers or polymers, wherein the alkylene has 1-12 carbon atoms and the degree of polymerization of the alkylene oxide is in the range of from 2 to 100. The amount of grafting can be in any suitable range, preferably below 50% of the amino groups, and even more preferably below 10% of the amino groups. Grafting of ethylene oxide on the dendrimer can be performed by any suitable means known to those of ordinary skill in the art. For instance, a polyethylene glycol monomethyl ether of suitable molecular weight can be converted to polyethylene glycol monomethyl ether p-toluene sulfonate by suitably reacting with p-toluenesulfonyl chloride and pyridine, and the sulfonate then reacted with the dendrimer under suitable conditions, as known to those of ordinary skill in the art. Grafted dendrimers can also be obtained from Dendritech, Inc. in Midland, Mich.

Other preferred dendrimers for use in the preparation of the ink composition of the present invention include those having terminal amine functionality at the surface. It is further preferred that the dendrimer has a molecular weight in the range from 300 to 100,000, a generation number of from 0 to 10, a surface amine group concentration of from 3 to 4100, and a molecular diameter of from 1 nm to 1000 nm. More preferred dendrimers are those having terminal primary amine functionality. It is also more preferred that the dendrimer has a molecular weight in the range from 500 to 30,000, a generation number of from 0 to 5, a surface group concentration of from 4 to 150, and a molecular diameter of from 1 nm to 150 nm. It is also preferred that the polydispersity index (Mw/Mn) of the dendrimer is low, preferably in the range of from 1.1000 to 1.0001, and more preferably in the range of from 1.001 to 1.0001. Examples of dendrimers prepared by the divergent approach include the STARBURST^{™} dendrimers available from Dendritech, Inc. These dendrimers from Dendritech, Inc. are polyamidoamines (PAMAMs) having primary amine terminal surface functionality, and made of ethylene diamine core and sequenced copolymers of ethylene diamine and methyl acrylate. They have a polydispersity index of 1.0007.
The dendrimer is present in the ink composition in an amount sufficient to provide sufficient adhesion of the ink components to the printing surface, and also to provide sufficient water resistance and cold and hot humidity resistance. The amount of the dendrimer is preferably in the range of from 0.1% to 10% by weight, more preferably in the range of from 0.5% to 2% by weight, and even more preferably in the range of from 1% by weight to 2% by weight, of the ink composition.

### Physical properties of the radiation curable ink compositions

In formulating the radiation curable ink compositions of the present invention, certain physical properties should be satisfied. For example, ink compositions for use in ink jet recording processes should have appropriate viscosity and surface tension characteristics.

According to a preferred embodiment of the radiation curable ink composition, according to the present invention, the radiation curable ink has a viscosity of from 1 to 100 mPa.s at 25 °C.

According to a preferred embodiment of the radiation curable ink composition, according to the present invention, the radiation curable ink has a surface tension of from 20 to 72 mN/m and preferably of from 20 to 60 mN/m.

### Process for obtaining an ink-jet image

Aspects of the present invention are realized by a process for obtaining a colourless, monochrome or multicolour ink jet image comprising the steps of jetting one or more streams of ink droplets having the above-mentioned composition onto an ink-jet ink receiver material, and subjecting the obtained image to radiation curing.

According to a first embodiment of the process for obtaining an ink-jet image, according to the present invention, the radiation curing is performed by means of at least one ultra-violet source and/or at least one electron beam source.

According to a second embodiment of the process for obtaining an ink-jet image, according to the present invention, wherein the curing is a free radical polymerization process.

According to a third embodiment of the process for obtaining an ink-jet image, according to the present invention, wherein the curing is a cationic polymerization process.

According to a fourth embodiment of the process for obtaining an ink-jet image, according to the present invention, the ink-jet ink receiver material is selected from the group consisting of paper, coated paper, polyolefin coated paper, cardboard, wood, composite boards, plastic, coated plastic, canvas, textile, metal, glasses, plant fibre products, leather, magnetic materials and ceramics, or supports provided with an ink-accepting layer.

According to a fifth embodiment of the process for obtaining an ink-jet image, according to the present invention, the ink-jet receiver material comprises an ink-accepting layer containing a microporous pigment or a polymer blend.

### Radiation curing apparatuses

Apparatuses for radiation curing are known to those skilled in the art and are commercially available. For example, the curing proceeds with medium pressure mercury vapour lamps with or without electrodes, or pulsed xenon lamps. These ultraviolet sources usually are equipped with a cooling installation, an installation to remove the produced ozone and optionally a nitrogen inflow to exclude air from the surface of the product to be cured during radiation processing. An intensity of 40 to 240 W/cm in the 200-400 nm region is usually employed. An example of a commercially available ultraviolet medium-pressure electrodeless mercury vapour lamp is the model VPS/I600 curing system of Fusion UV systems Ltd., UK. A pulsed xenon flash lamp is commercially available from IST Strahlentechnik GmbH, Nürtingen, Germany. Using the Fusion model one has also the possibility to use metal halide doped Hg vapour or XeCl excimer lamps, each with its specific UV emission spectrum. This permits a higher degree of freedom in formulating the curing composition : a more efficient curing is possible using the lamp with the most appropriate spectral characteristics.

High energy ionizing radiation such as X-rays, gamma rays, beta rays and accelerated electrons can also be used to accomplish curing of the ink composition.

### Ink-jet printing heads

The radiation curable ink compositions according to the present invention can be used with any ink jet printhead, but are preferably used with piezoelectric printheads which can be heated to accommodate different viscosities. Typical examples include printheads form Spectra Inc., Epson, Brother, Xaar Ltd., Trident International, as well as printhead designs described in "Inkjet Technology and Product Development Strategies, S.F. Pond, Torrey Pines research, 2000" and in "Proceedings IS&T's International Conference on Digital Production Printing and Industrial Applications", 2001, Antwerp, Belgium, such as page 230-234. The radiation curable ink compositions can be used with any type of nozzle plate, such as nozzle plates based on silicon, polyimides, silicon nitride.

### Industrial applicability

The radiation curable ink compositions, according to the present invention, can be used in ink-jet printing and in other printing applications where radiation curing is applied, such as flexo printing and liquid electrophotography.

The radiation curable ink compositions, according to the present invention can also be used to manufacture printing plates, such as in computer-to-plate applications, and to make printed circuit boards (PCB) and displays, such as OLED's.
The present invention will now be illustrated by the following examples without however being limited thereto.
Ingredients used in the radiation curable ink compositions disclosed in the EXAMPLES:
- TPGDA =: tri(propyleneglycol) diacrylate
- DPGDA =: di(propyleneglycol) diacrylate
- TMPTA =: trihydroxymethylpropane triacrylate
- CN501 =: CRAYNOR^{™} CN501, an amino-modified polether acrylate from Cray Valley Co.

### EXAMPLE 1

The solubility of some invention compounds was determined in several reactive diluents and oligomers such as TPGDA, TMPTA and CN501 and the results are given below in Table 3.

**Table 3:**

| | Solubility in TPGDA [wt%] | Solubility in TMPTA [wt%] | Solubility in CN501 [wt%] |
|---|---|---|---|
| I.6 | <10* | <10* | <10* |
| I.7 | <10* | <10* | <10* |
| I.9 | insoluble# | insoluble# | |
| I.10 | 50 | 50 | 50 |
| I.22 | 50 | 50 | 50 |
| I.24 | 50 | 50 | 50 |

| | | | |
|---|---|---|---|
| * addition of a very small amount of CH₂Cl₂ resulted in complete solubility, the compound remaining in solution upon removal of the CH₂Cl₂ # dissolved after the addition of a very small amount of CH₂Cl₂ | | | |

### EXAMPLE 2

The following clear inks were formulated:

**Table 4:**

| | **DPGDA** | **Craynor CN501** | **I.10** |
|---|---|---|---|
| ink 1 | 50 g | 45 g | 5 g |
| ink 2 | 50 g | 40 g | 10 g |
| ink 3 | 50 g | 25 g | 25 g |

| | **DPGDA** | **Craynor CN501** | **I.24** |
|---|---|---|---|
| ink 4 | 50 g | 45 g | 5 g |
| ink 5 | 50 g | 40 g | 10 g |
| ink 6 | 50 g | 25 g | 25 g |

| | **DPGDA** | **Craynor CN501** | **I.22** |
|---|---|---|---|
| ink 7 | 50 g | 45 g | 5 g |
| ink 8 | 50 g | 40 g | 10 g |
| ink 9 | 50 g | 25 g | 25 g |

| | **DPGDA** | **Craynor CN501** | **I.6** |
|---|---|---|---|
| ink 10 | 50 g | 47.5 g | 2.5 g |
| ink 11 | 50 g | 45 g | 5 g |

| | **DPGDA** | **Craynor CN501** | **I.7** |
|---|---|---|---|
| ink 12 | 50 g | 47.5 g | 2.5 g |
| ink 13 | 50 g | 45 g | 5 g |

10 g Irgacure 500 and 5 g NMDA were added to each ink formulation and the resulting ink compositions were coated on a clear unsubbed 175 µm thick PET polyester film, using a bar coater and a 10µm wired bar.

The coated films were cured using a Fusion DRSE-120 conveyer, equipped with a Fusion VPS/I600 lamp (D bulb), which transported the films under the UV lamp on a conveyer belt at a speed of 20 m/min. The percentage of the maximum output of the lamp to cure the film was used as a measure for the sensitivity.

The curing was evaluated by means of a scratch test with a cotton bud. If the coating did not remain visually unchanged after scratching, the curing was regarded as being incomplete. The sensitivities of the inks are summarised in Table 5.

**Table 5:**

| | Sensitivity output % | | Sensitivity output % |
|---|---|---|---|
| Ink 1 | 55 | Ink 8 | 60 |
| Ink 2 | 65 | Ink 9 | 90 |
| Ink 3 | 100 | Ink 10 | 50 |
| Ink 4 | 60 | Ink 11 | 50 |
| Ink 5 | 90 | Ink 12 | 50 |
| Ink 6 | 100 | Ink 13 | 45 |
| Ink 7 | 50 | | |

As can be seen from Table 5 all inks were readily cured.

## Claims

1. A radiation curable ink composition comprising at least one initiator and at least one polyhedral oligomeric silsesquioxane (POSS) **characterized in that** said silsesquioxane is selected from the group consisting of : 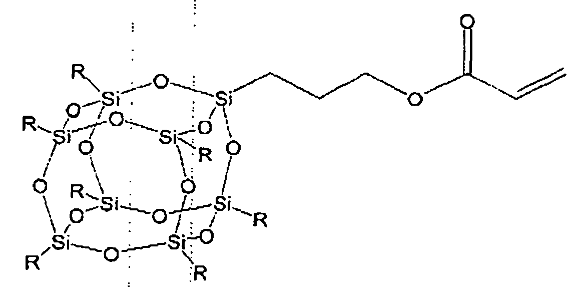 wherein R = cyclohexyl, cyclopentyl or isobutyl; 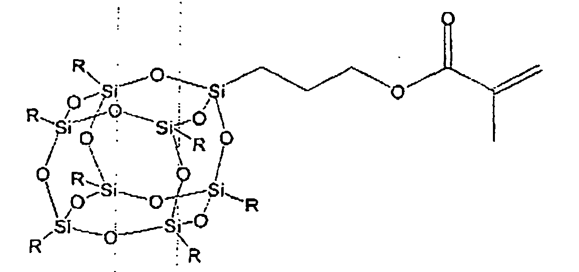 wherein R = cyclohexyl, cyclopentyl, ethyl, isobutyl, isooctyl or phenyl; 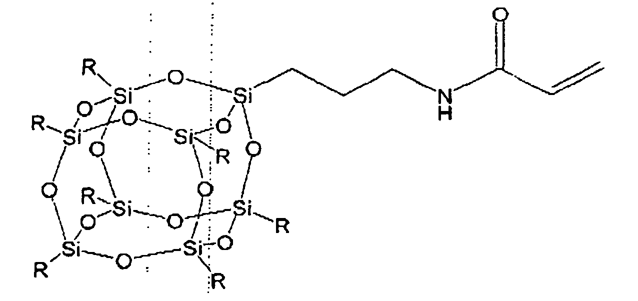 wherein R = cyclohexyl, cyclopentyl or isobutyl; 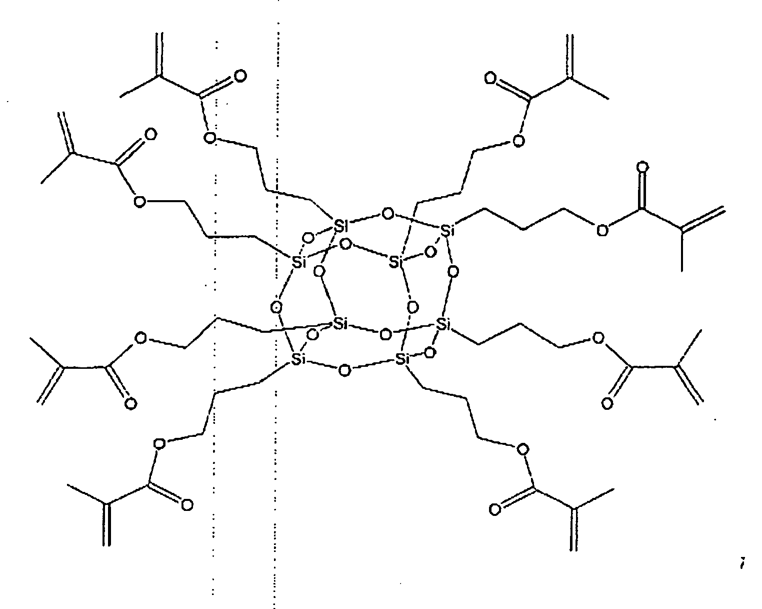 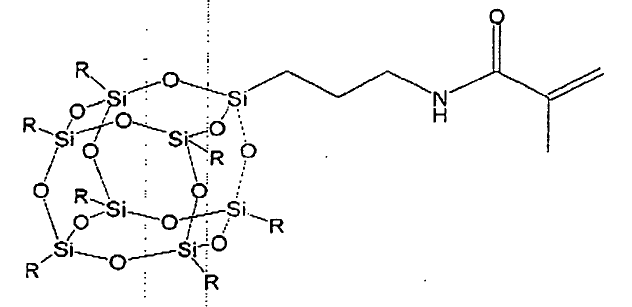 wherein R = cyclohexyl, cyclopentyl, ethyl, isobutyl, isooctyl or phenyl; 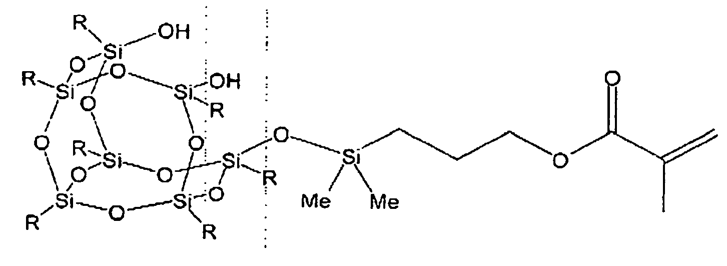 wherein R = cyclohexyl, cyclopentyl or isobutyl; 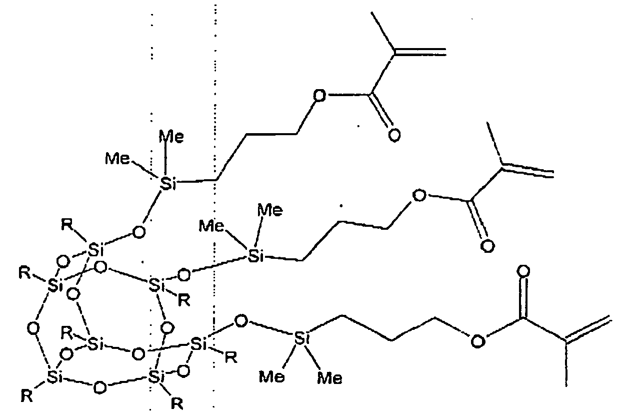 wherein R = cyclohexyl or isobutyl; 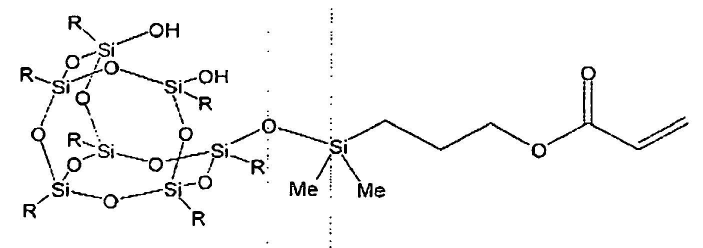 wherein R = cyclohexyl, cyclopentyl or isobutyl; 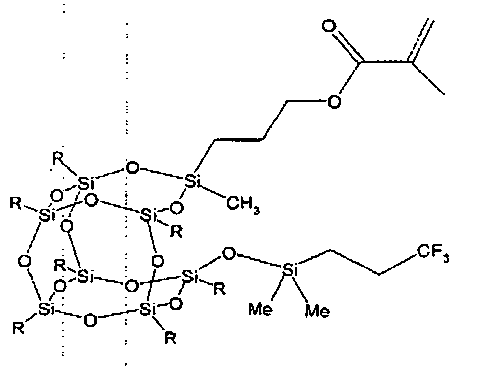 wherein R = cyclopentyl; 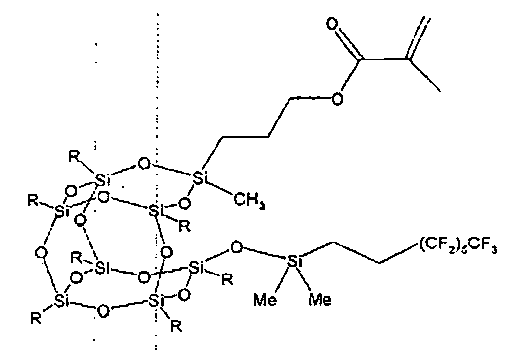 wherein R = cyclopentyl; 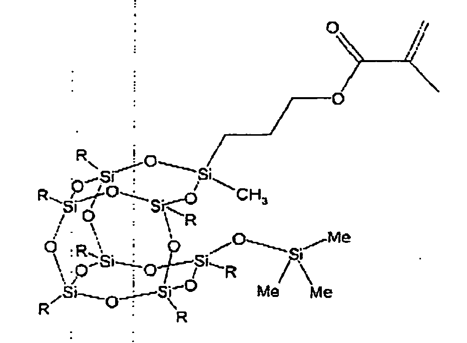 Wherein R = cyclopentyl or isobutyl; 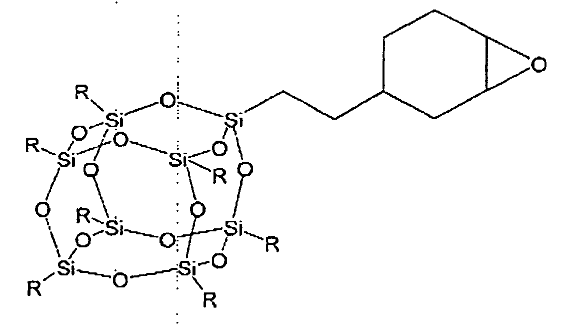 wherein R = cyclohexyl, cyclopentyl or isobutyl; 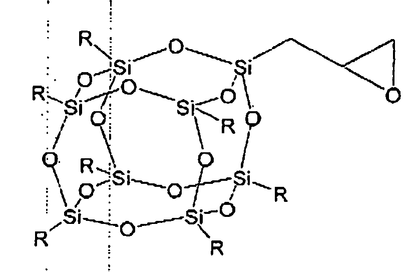 wherein R = cyclohexyl, cyclopentyl or isobutyl; 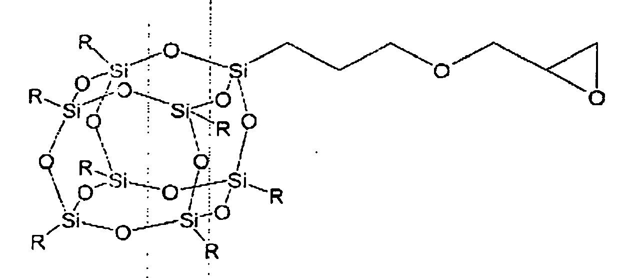 wherein R = cyclohexyl, cyclopentyl, ethyl, isobutyl, isooctyl or phenyl; 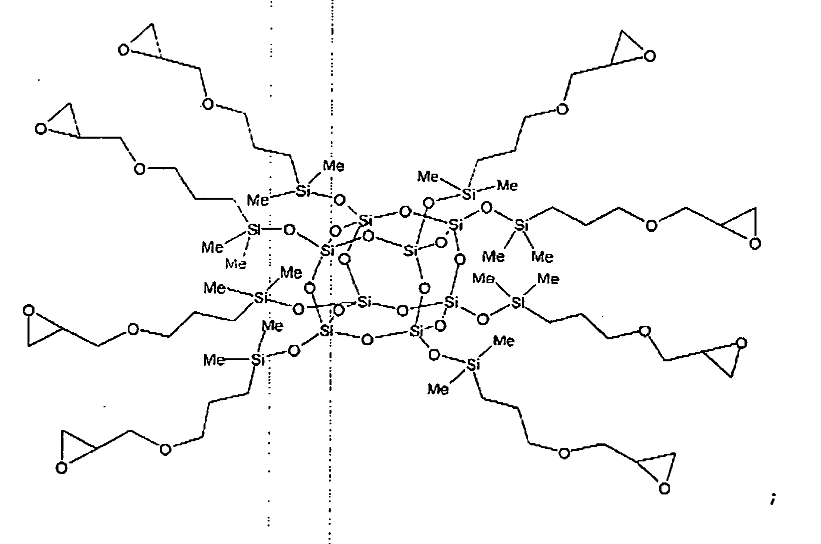 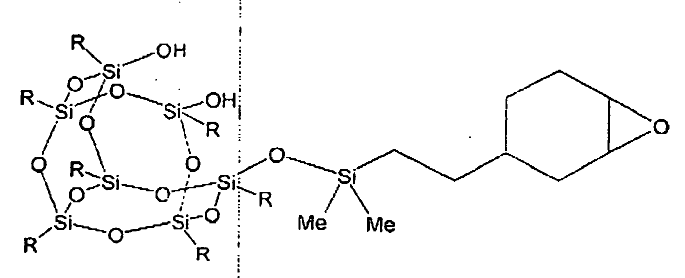 wherein R = isobutyl; 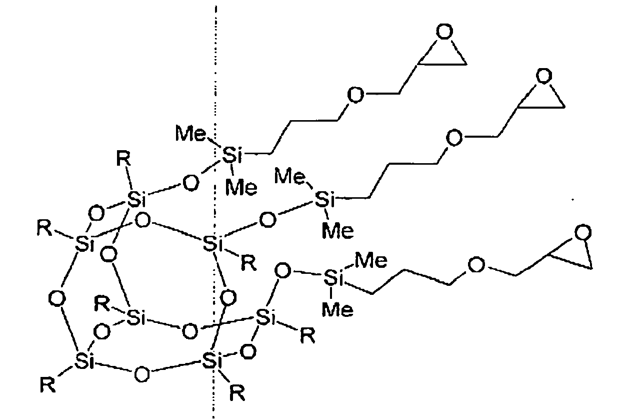 wherein R = cyclohexyl, cyclopentyl, ethyl, isobutyl; 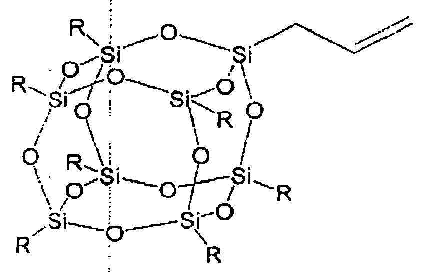 wherein R = cyclohexyl, cyclopentyl, isobutyl; 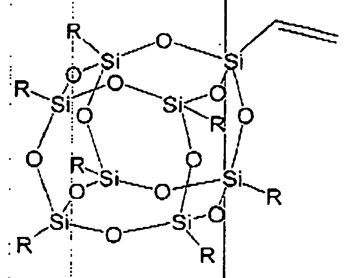 wherein R = cyclohexyl, cyclopentyl, isobutyl; 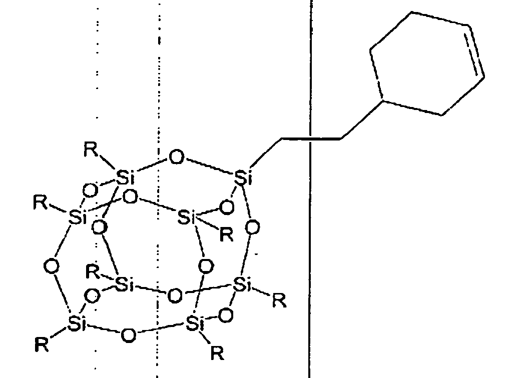 wherein R = cyclopentyl; 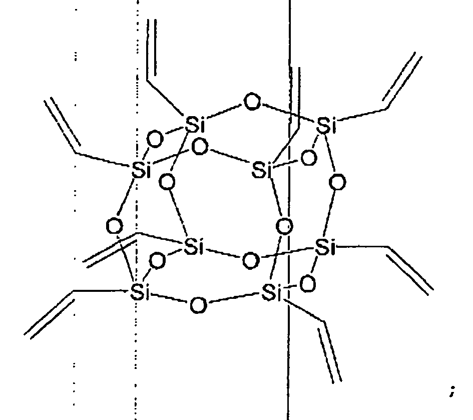 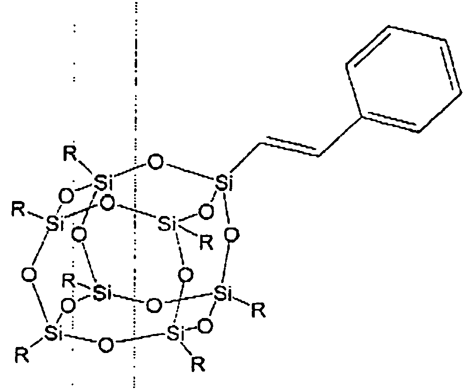 wherein R = isobutyl; and 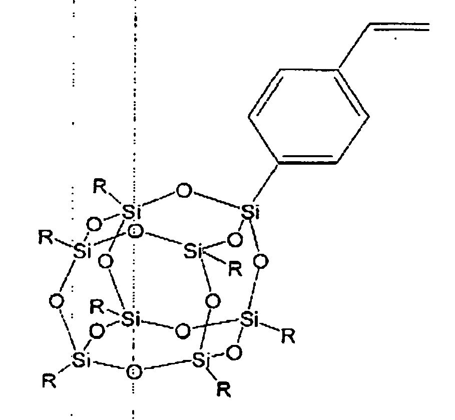 wherein R = cyclohexyl, cyclopentyl, isobutyl.

2. Radiation curable ink composition according to claim 1, wherein said initiator is a photoinitiator.

3. Radiation curable ink composition according to any of the preceding claims, wherein said composition further contains an initiator synergist.

4. Radiation curable ink composition according to any of the preceding claims, wherein said composition further contains at least one colorant.

5. Radiation curable ink composition according to claim 4, wherein said colorant is a dye.

6. Radiation curable ink composition according to claim 4, wherein said colorant is a pigment.

7. Radiation curable ink composition according to claim 4, wherein said colorant is an inorganic pigment.

8. Radiation curable ink composition according to claim 4, wherein said colorant is a dispersed pigment or a solid solution of a pigment.

9. Radiation curable ink composition according to any of claims 6 to 8, wherein said pigment is selected from the group consisting of Pigment Yellow 1, 3, 128, 109, 93, 17, 14, 10, 12, 13, 83, 65, 75, 74, 73, 138, 139, 154, 151, 180, 185; Pigment Red 122, 22, 23, 17, 210, 170, 188, 185, 146, 144, 176, 57:1, 184, 202, 206, 207; Pigment Blue 15:3, Pigment Blue 15:2, Pigment Blue 15:1, Pigment Blue 15:4, Pigment Blue 15:6, Pigment Blue 16, and carbon black.

10. Radiation curable ink composition according to any of the preceding claims, wherein said composition further comprises at least one photopolymerizable compound selected from the group consisting of vinylether methacrylates and vinylether acrylates.

11. Radiation curable ink composition according to claim 10,
wherein said vinylether methacrylate or vinylether acrylate is selected from group consisting of:

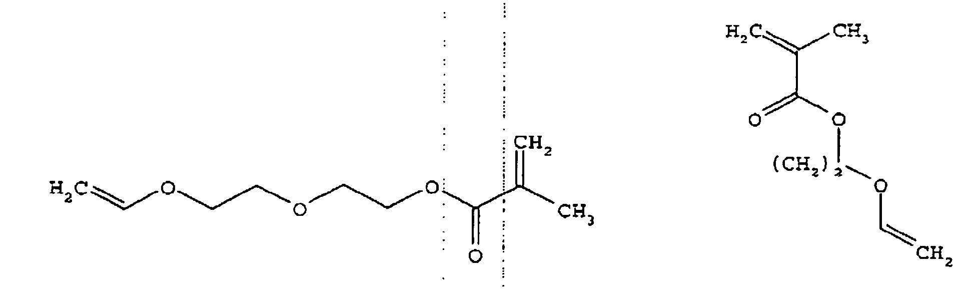

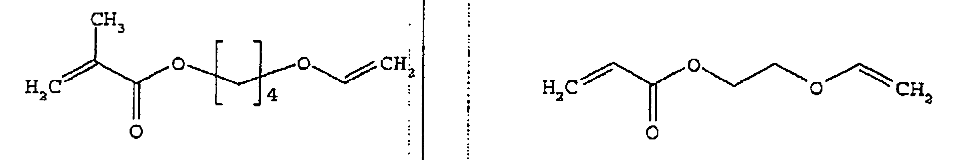

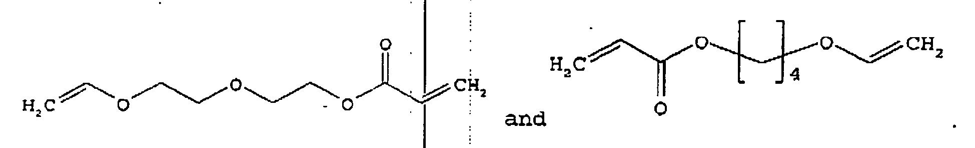

12. Radiation curable ink composition according to any of the preceding claims, where said ink composition further contains a second photopolymerizable monomer, oligomer or prepolymer.

13. Radiation curable ink composition according to claim 12, wherein said second monomer is selected from the group consisting of amino modified polyether acrylates, urethane acrylates, polyester acrylates, polyether acrylates, and epoxy acrylates.

14. Radiation curable ink composition according to any of the preceding claims, wherein said composition further contains water as a solvent.

15. Radiation curable ink composition according to any of the preceding claims, wherein said composition further contains water and/or at least one organic solvent.

16. Radiation curable ink composition according to any of the preceding claims, wherein said composition further comprises at least one conducting or semiconducting polymer.

17. Radiation curable ink composition according to claim 16, wherein said at least one conducting or semiconducting polymer is selected from the group consisting of substituted polyanilines, unsubstituted polyanilines, polypyrroles, substituted polythiophenes, unsubstituted polythiophenes, substituted poly(phenylenevinylenes, unsubstituted poly(phenylenevinylenes, and polyfluorenes.

18. Radiation curable ink composition according to any of the preceding claims, wherein said composition further comprises at least one antioxidant.

19. Radiation curable ink composition according to any of the preceding claims, wherein said composition further comprises a dendrimer.

20. Radiation curable ink composition according to any of the preceding claims, wherein the viscosity of said ink composition is between 1 and 100 mPa.s at 25 °C.

21. Radiation curable ink composition according to any of the preceding claims, wherein said radiation curable ink composition is a radiation curable ink-jet ink composition.

22. A process for obtaining a colourless, monochrome or multicolour ink jet image comprising the steps of jetting one or more streams of ink droplets having a composition according to any of the previous claims onto an ink-jet ink receiver material, and subjecting the obtained image to radiation curing.

23. Process according to claim 22, wherein said radiation curing is performed by means of at least one ultra-violet source and/or at least one electron beam source.

24. Process according to claim 22, wherein said curing is a free radical polymerization process.

25. Process according to claim 22, wherein said curing is a cationic polymerization process.

26. Process according to any of claims 22 to 25, wherein said ink-jet receiving material is selected from the group consisting of paper, coated paper, polyolefin coated paper, cardboard, wood, composite boards, plastic, coated plastic, canvas, textile, metal, glasses, plant fibre products, leather, magnetic materials and ceramics, or supports provided with an ink-accepting layer.

27. Process according to claim 26, wherein said ink accepting layer contains a microporous pigment or a polymer blend.

## Patentansprüche

1. Eine strahlungshärtbare Tintenzusammensetzung, die zumindest einen Initiator und zumindest ein polyedrisches oligomeres Silsesquioxan (POSS) enthält, **dadurch gekennzeichnet, dass** das Silsesquioxan aus folgender Gruppe ausgewählt wird : 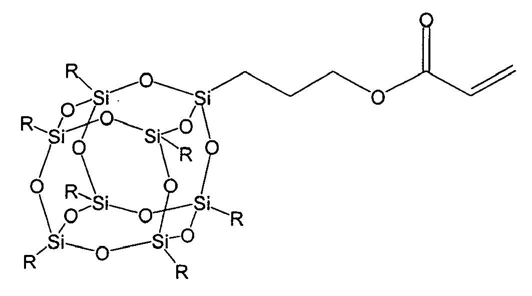 in der R = Cyclohexyl, Cyclopentyl oder Isobutyl, 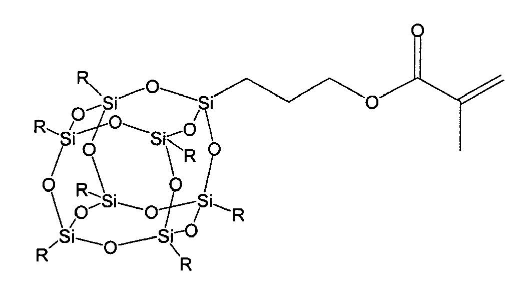 in der R = Cyclohexyl, Cyclopentyl, Ethyl, Isobutyl, Isooctyl oder Phenyl, 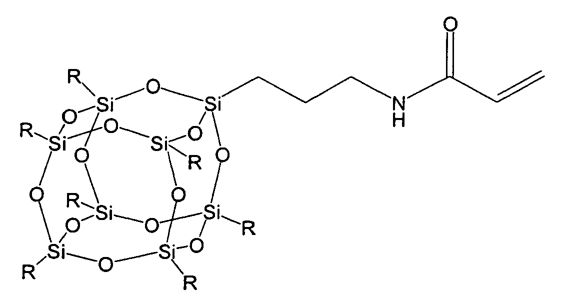 in der R = Cyclohexyl, Cyclopentyl oder Isobutyl, 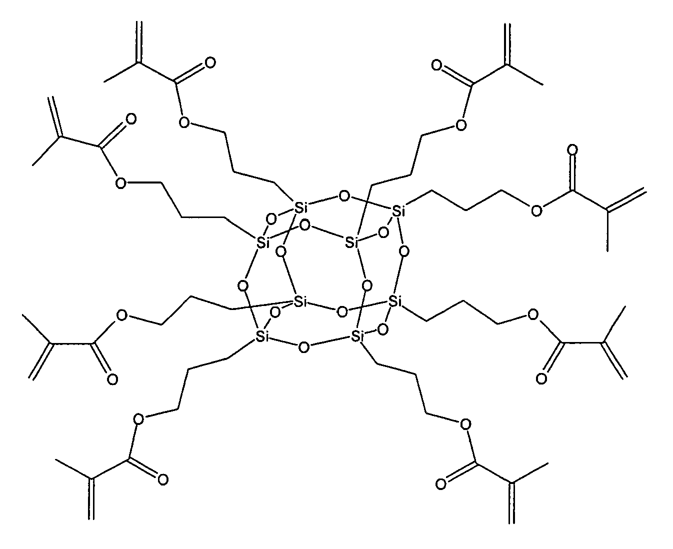 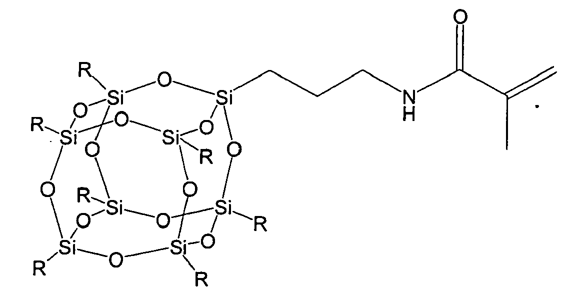 in der R = Cyclohexyl, Cyclopentyl, Ethyl, Isobutyl, Isooctyl oder Phenyl, 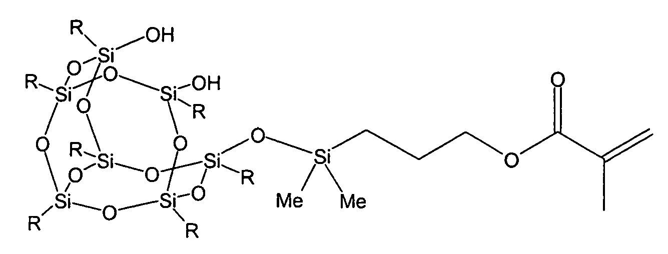 in der R = Cyclohexyl, Cyclopentyl oder Isobutyl, 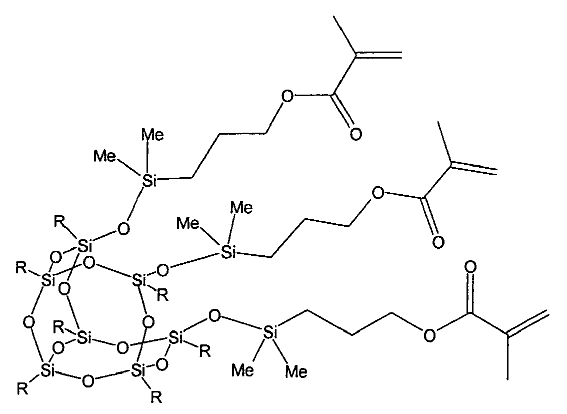 in der R = Cyclohexyl oder Isobutyl, 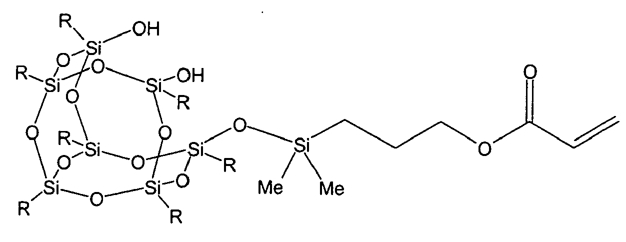 in der R = Cyclohexyl, Cyclopentyl oder Isobutyl, 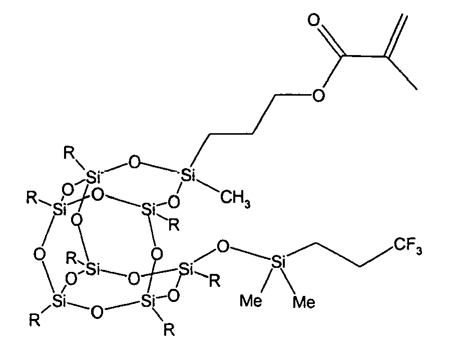 in der R = Cyclopentyl, 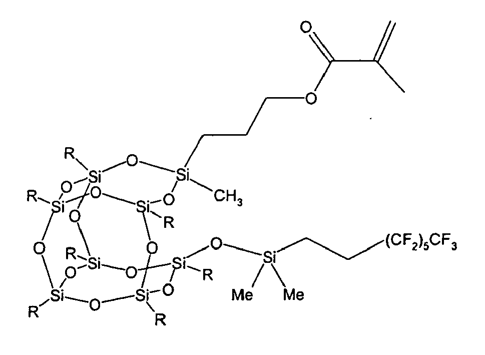 in der R = Cyclopentyl, 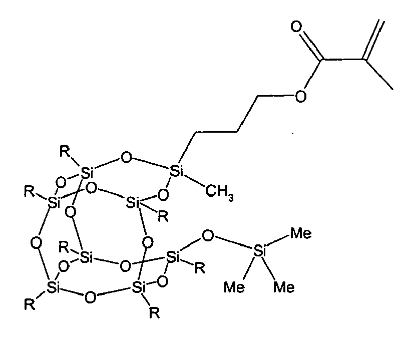 in der R = Cyclopentyl oder Isobutyl, 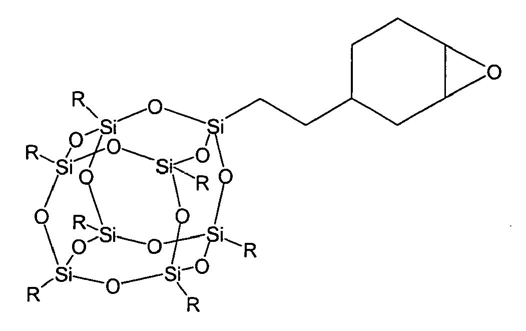 in der R = Cyclohexyl, Cyclopentyl oder Isobutyl, 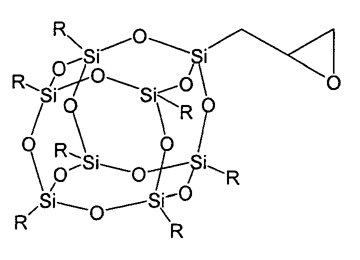 in der R = Cyclohexyl, Cyclopentyl oder Isobutyl, 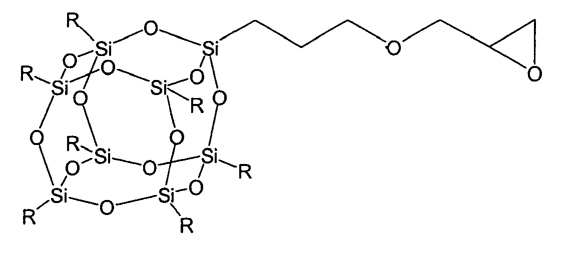 in der R = Cyclohexyl, Cyclopentyl, Ethyl, Isobutyl, Isooctyl oder Phenyl, 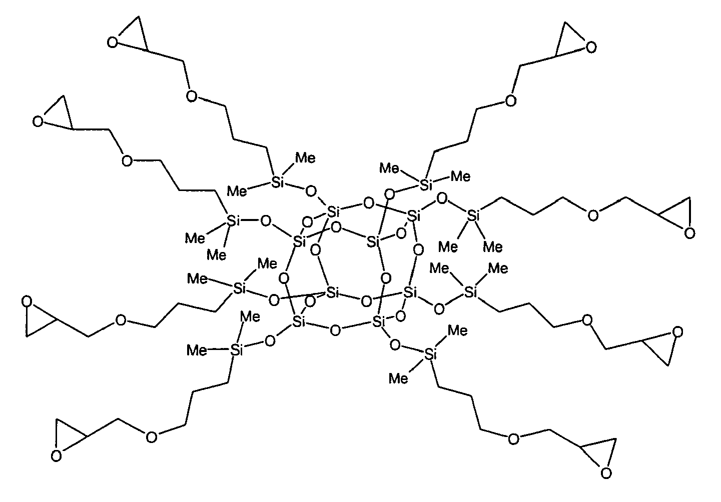 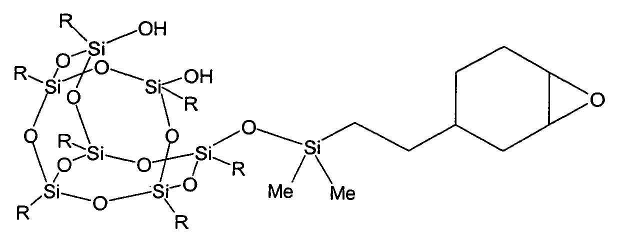 in der R = Isobutyl, 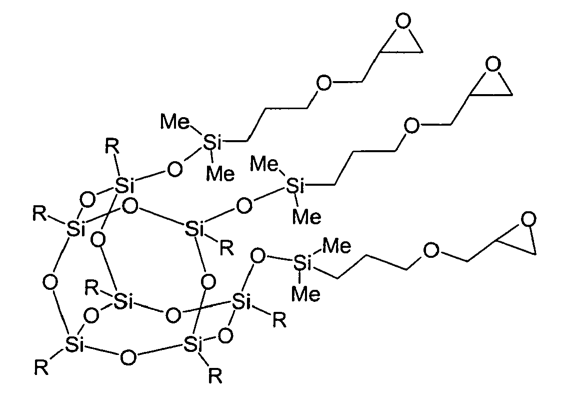 in der R = Cyclohexyl, Cyclopentyl, Ethyl oder Isobutyl, 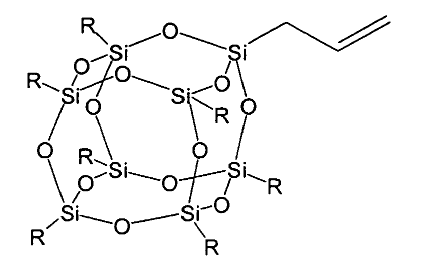 in der R = Cyclohexyl, Cyclopentyl oder Isobutyl, 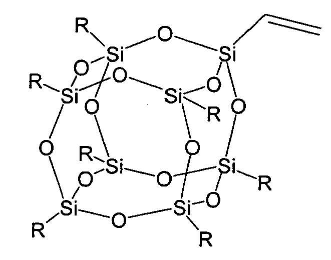 in der R = Cyclohexyl, Cyclopentyl oder Isobutyl, 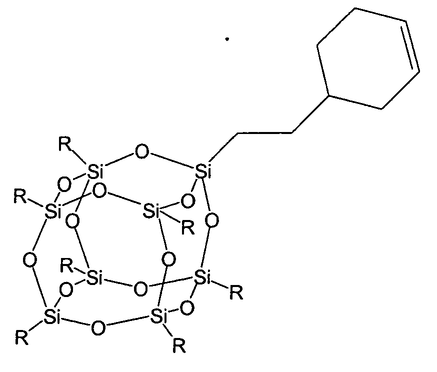 in der R = Cyclopentyl, 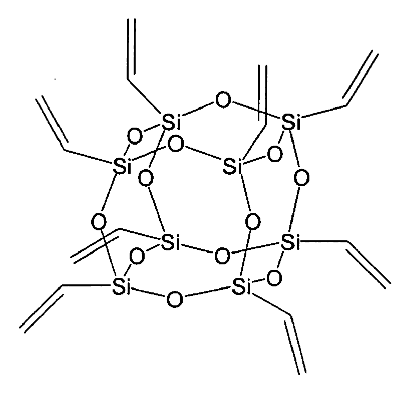 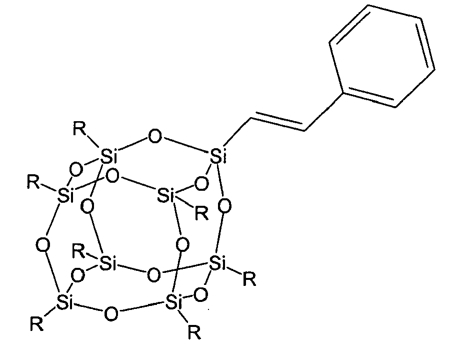 in der R = Isobutyl und 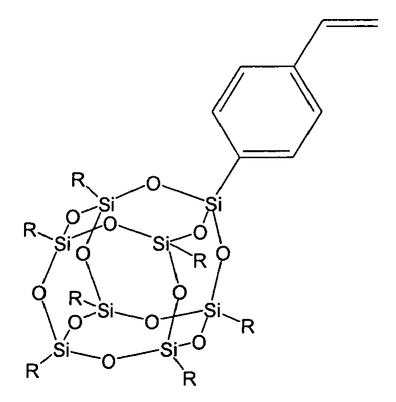 in der R = Cyclohexyl, Cyclopentyl oder Isobutyl.

2. Strahlungshärtbare Tintenzusammensetzung nach Anspruch 1, **dadurch gekennzeichnet, dass** der Initiator ein Fotoinitiator ist.

3. Strahlungshärtbare Tintenzusammensetzung nach einem der vorstehenden Ansprüche, **dadurch gekennzeichnet, dass** die Zusammensetzung ferner einen Initiatorsynergisten enthält.

4. Strahlungshärtbare Tintenzusammensetzung nach einem der vorstehenden Ansprüche, **dadurch gekennzeichnet, dass** die Zusammensetzung ferner zumindest ein Farbmittel enthält.

5. Strahlungshärtbare Tintenzusammensetzung nach Anspruch 4, **dadurch gekennzeichnet, dass** das Farbmittel ein Farbstoff ist.

6. Strahlungshärtbare Tintenzusammensetzung nach Anspruch 4, **dadurch gekennzeichnet, dass** das Farbmittel ein Pigment ist.

7. Strahlungshärtbare Tintenzusammensetzung nach Anspruch 4, **dadurch gekennzeichnet, dass** das Farbmittel ein anorganisches Pigment ist.

8. Strahlungshärtbare Tintenzusammensetzung nach Anspruch 4, **dadurch gekennzeichnet, dass** das Farbmittel ein dispergiertes Pigment oder eine feste Lösung eines Pigments ist.

9. Strahlungshärtbare Tintenzusammensetzung nach einem der Ansprüche 6 bis 8, **dadurch gekennzeichnet, dass** das Pigment aus der Gruppe bestehend aus Pigment Yellow 1, 3, 128, 109, 93, 17, 14, 10, 12, 13, 83, 65, 75, 74, 73, 138, 139, 154, 151, 180, 185, Pigment Red 122, 22, 23, 17, 210, 170, 188, 185, 146, 144, 176, 57:1, 184, 202, 206, 207, Pigment Blue 15:3, Pigment Blue 15:2, Pigment Blue 15:1, Pigment Blue 15:4, Pigment Blue 15:6, Pigment Blue 16 und Russ ausgewählt wird.

10. Strahlungshärtbare Tintenzusammensetzung nach einem der vorstehenden Ansprüche, **dadurch gekennzeichnet, dass** die Zusammensetzung ferner zumindest eine fotopolymerisierbare Verbindung aus der Gruppe bestehend aus Vinylethermethacrylaten und Vinyletheracrylaten enthält.

11. Strahlungshärtbare Tintenzusammensetzung nach Anspruch 10, **dadurch gekennzeichnet, dass** das Vinylethermethacrylat oder Vinyletheracrylat aus folgender Gruppe ausgewählt wird : 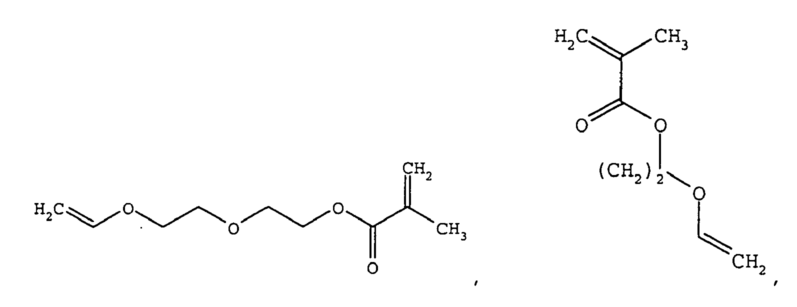 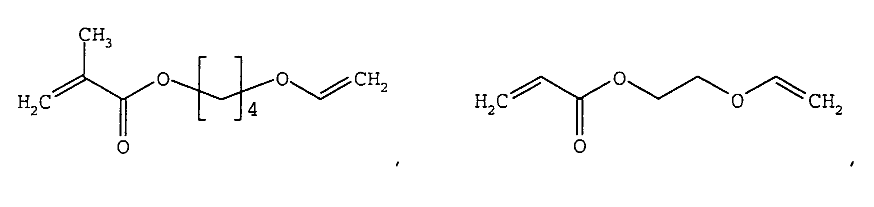 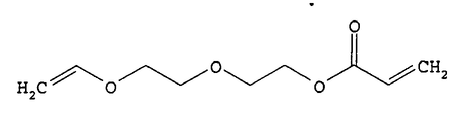 und

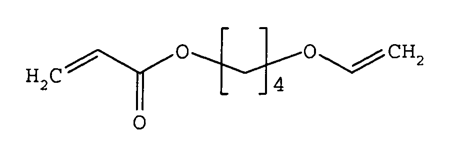

12. Strahlungshärtbare Tintenzusammensetzung nach einem der vorstehenden Ansprüche, **dadurch gekennzeichnet, dass** die Tintenzusammensetzung ferner ein zweites fotopolymerisierbares Monomer, Oligomer oder Prepolymer enthält.

13. Strahlungshärtbare Tintenzusammensetzung nach Anspruch 12, **dadurch gekennzeichnet, dass** das zweite Monomer aus der Gruppe bestehend aus aminmodifizierten Polyetheracrylaten, Urethanacrylaten, Polyesteracrylaten, Polyetheracrylaten und Epoxyacrylaten ausgewählt wird.

14. Strahlungshärtbare Tintenzusammensetzung nach einem der vorstehenden Ansprüche, **dadurch gekennzeichnet, dass** die Zusammensetzung ferner Wasser als Lösungsmittel enthält.

15. Strahlungshärtbare Tintenzusammensetzung nach einem der vorstehenden Ansprüche, **dadurch gekennzeichnet, dass** die Zusammensetzung ferner Wasser und/oder zumindest ein organisches Lösungsmittel enthält.

16. Strahlungshärtbare Tintenzusammensetzung nach einem der vorstehenden Ansprüche, **dadurch gekennzeichnet, dass** die Zusammensetzung ferner zumindest ein Leiterpolymer oder Halbleiterpolymer enthält.

17. Strahlungshärtbare Tintenzusammensetzung nach Anspruch 16, **dadurch gekennzeichnet, dass** das zumindest eine Leiterpolymer oder Halbleiterpolymer aus der Gruppe bestehend aus substituierten Polyanilinen, nicht-substituierten Polyanilinen, Polypyrrolen, substituierten Polythiophenen, nicht-substituierten Polythiophenen, substituierten Poly(phenylenvinylenen), nicht-substituierten Poly(phenylenvinylenen) und Polyfluorenen ausgewählt wird.

18. Strahlungshärtbare Tintenzusammensetzung nach einem der vorstehenden Ansprüche, **dadurch gekennzeichnet, dass** die Zusammensetzung ferner zumindest ein Antioxidans enthält.

19. Strahlungshärtbare Tintenzusammensetzung nach einem der vorstehenden Ansprüche, **dadurch gekennzeichnet, dass** die Zusammensetzung ferner ein Dendrimer enthält.

20. Strahlungshärtbare Tintenzusammensetzung nach einem der vorstehenden Ansprüche, **dadurch gekennzeichnet, dass** die Viskosität der Tintenzusammensetzung zwischen 1 und 100 mPa.s bei 25°C liegt.

21. Strahlungshärtbare Tintenzusammensetzung nach einem der vorstehenden Ansprüche, **dadurch gekennzeichnet, dass** die strahlungshärtbare Tintenzusammensetzung eine strahlungshärtbare Tintenzusammensetzung für Tintenstrahldruck ist.

22. Ein Verfahren zur Herstellung eines farblosen, monochromen oder mehrfarbigen Tintenstrahlbildes, das als Schritte das Aufschleudern einer oder mehrere Ströme von Tintentropfen mit einer Zusammensetzung nach einem der vorstehenden Ansprüche auf ein Tintenstrahltinte aufnehmendes Material und das Strahlungshärten des so erhaltenen Bildes umfasst.

23. Verfahren nach Anspruch 22, **dadurch gekennzeichnet, dass** die Strahlungshärtung mittels zumindest einer Ultraviolettstrahlungsquelle und/oder zumindest einer Elektronenstrahlungsquelle erfolgt.

24. Verfahren nach Anspruch 22, **dadurch gekennzeichnet, dass** die Härtung ein radikalischer Polymerisationsprozess ist.

25. Verfahren nach Anspruch 22, **dadurch gekennzeichnet, dass** die Härtung ein kationischer Polymerisationsprozess ist.

26. Verfahren nach einem der Ansprüche 22 bis 25, **dadurch gekennzeichnet, dass** als Tintenstrahltinte aufnehmendes Material Papier, gestrichenes Papier, polyolefinbeschichtetes Papier, Karton, Holz, Verbundkarton, Kunststoff, gestrichener Kunststoff, Kanevas, Textilien, Metall, Glas, ein Pflanzenfaserprodukt, Leder, ein magnetisches Material oder Keramik oder ein mit einer tintenaufnehmenden Schicht beschichteter Träger verwendet wird.

27. Verfahren nach Anspruch 26, **dadurch gekennzeichnet, dass** die tintenaufnehmende Schicht ein mikroporöses Pigment oder ein Polymergemisch enthält.

## Revendications

1. Composition d'encre durcissable par exposition à un rayonnement, comprenant au moins un initiateur et au moins un silsesquioxane oligomère polyèdre (POSS), **caractérisée en ce que** ledit silsesquioxane est choisi parmi le groupe constitué par : 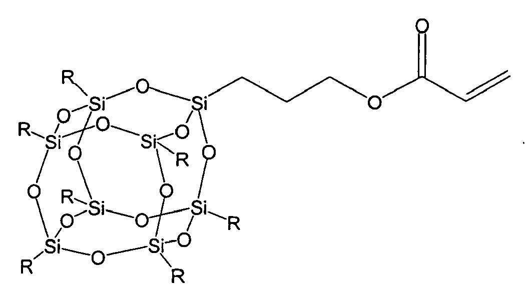 dans lequel R = un groupe cyclohexyle, un groupe cyclopentyle ou un groupe isobutyle ; 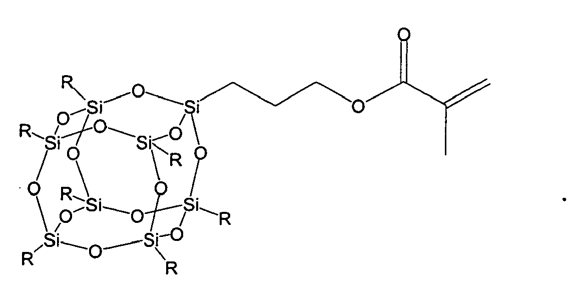 dans lequel R = un groupe cyclohexyle, un groupe cyclopentyle, un groupe éthyle, un groupe isobutyle, un groupe isooctyle ou un groupe phényle ; 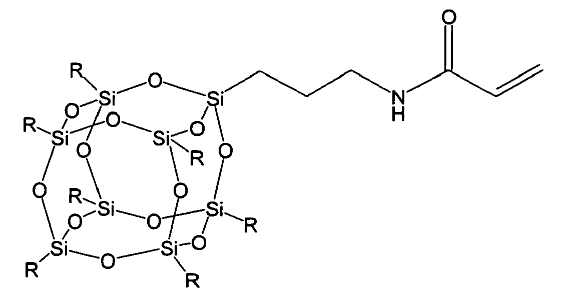 dans lequel R = un groupe cyclohexyle, un groupe cyclopentyle ou un groupe isobutyle ; 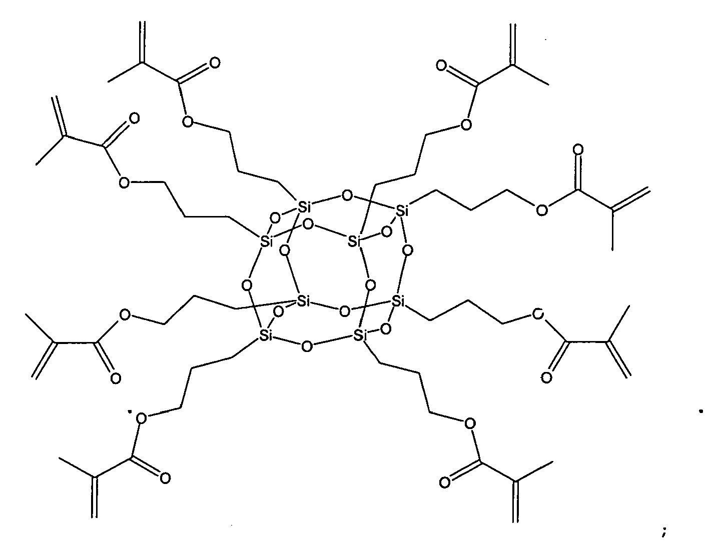 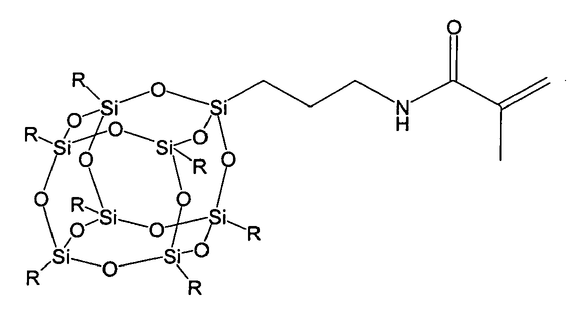 dans lequel R = un groupe cyclohexyle, un groupe cyclopentyle, un groupe éthyle, un groupe isobutyle, un groupe isooctyle ou un groupe phényle ; 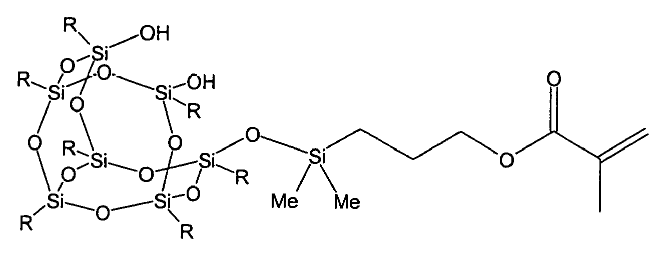 dans lequel R = un groupe cyclohexyle, un groupe cyclopentyle ou un groupe isobutyle ; 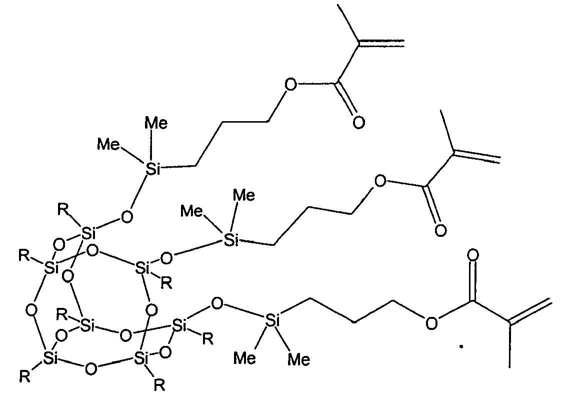 dans lequel R = un groupe cyclohexyle ou un groupe isobutyle ; 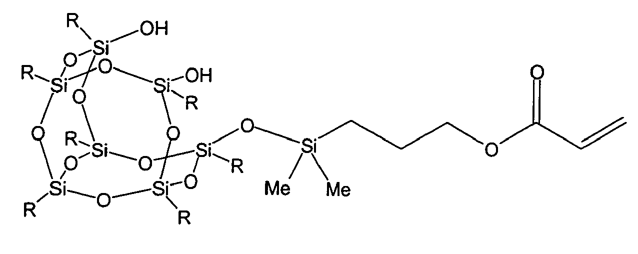 dans lequel R = un groupe cyclohexyle, un groupe cyclopentyle ou un groupe isobutyle ; 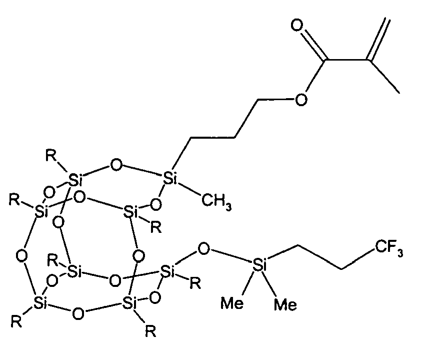 dans lequel R = un groupe cyclopentyle ; 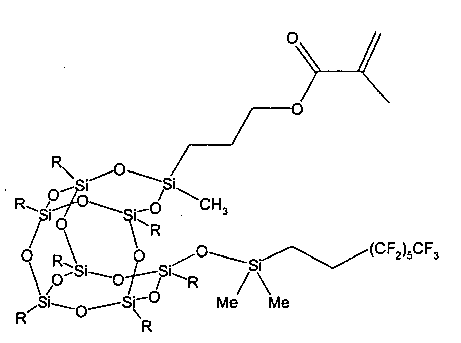 dans lequel R = un groupe cyclopentyle ; 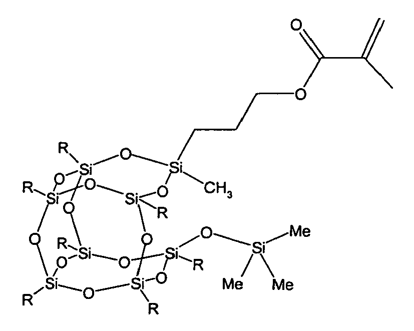 dans lequel R = un groupe cyclopentyle ou un groupe isobutyle ; 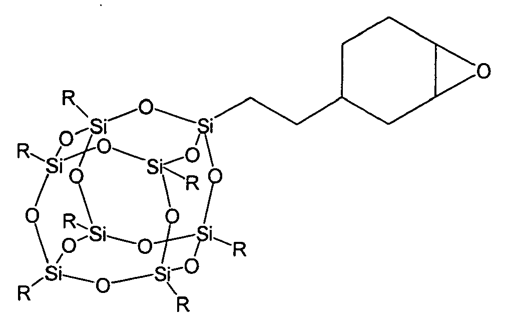 dans lequel R = un groupe cyclohexyle, un groupe cyclopentyle ou un groupe isobutyle ; 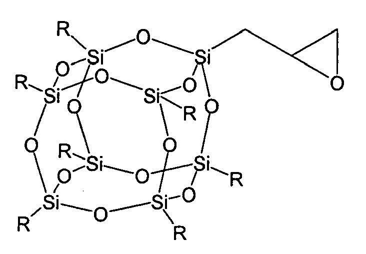 dans lequel R = un groupe cyclohexyle, un groupe cyclopentyle ou un groupe isobutyle ; 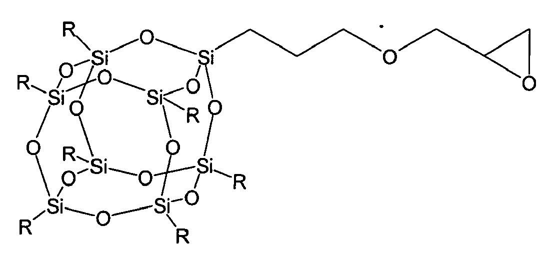 dans lequel R = un groupe cyclohexyle, un groupe cyclopentyle, un groupe éthyle, un groupe isobutyle, un groupe isooctyle ou un groupe phényle ; 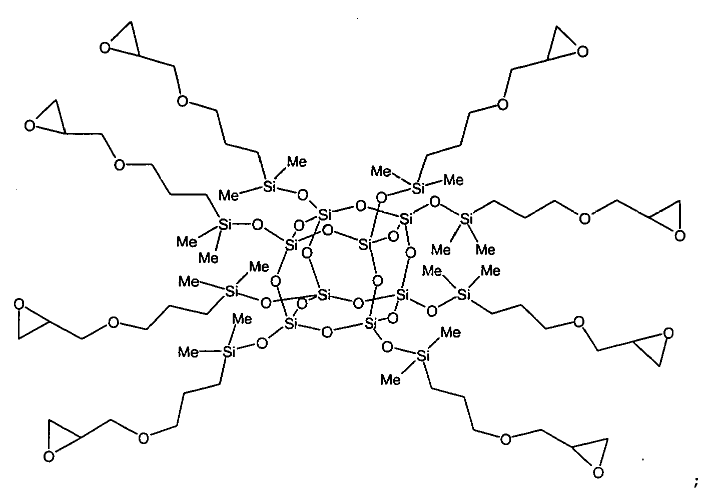 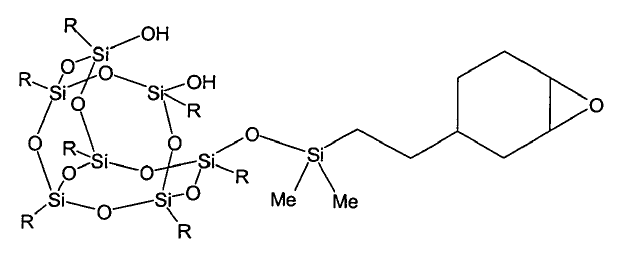 dans lequel R = un groupe isobutyle ; 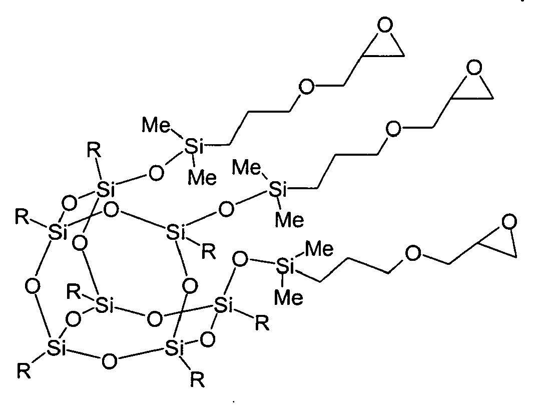 dans lequel R = un groupe cyclohexyle, un groupe cyclopentyle, un groupe éthyle, un groupe isobutyle ; 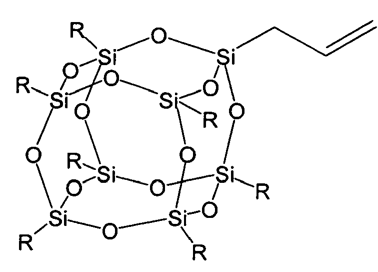 dans lequel R = un groupe cyclohexyle, un groupe cyclopentyle, un groupe isobutyle ; 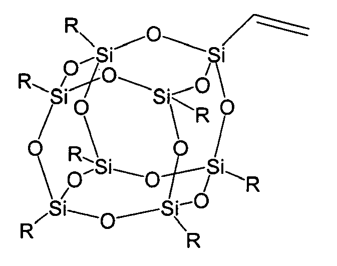 dans lequel R = un groupe cyclohexyle, un groupe cyclopentyle, un groupe isobutyle ; 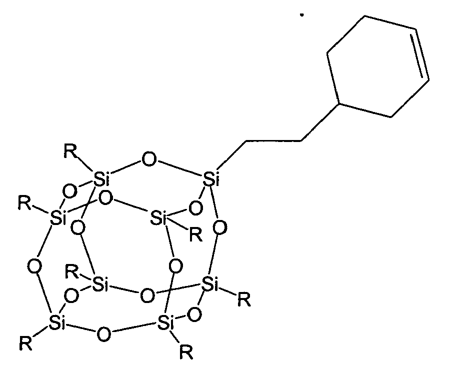 dans lequel R = un groupe cyclopentyle ; 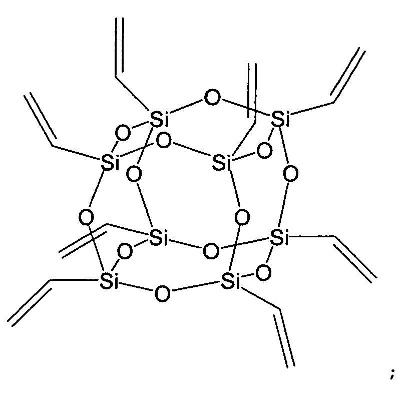 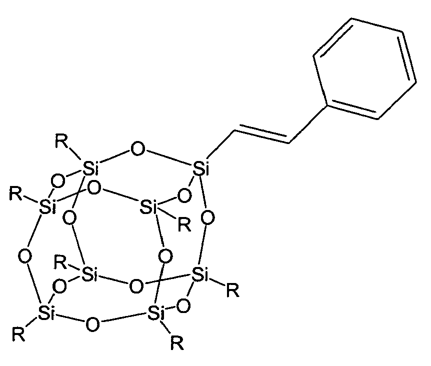 dans lequel R = un groupe isobutyle ; et 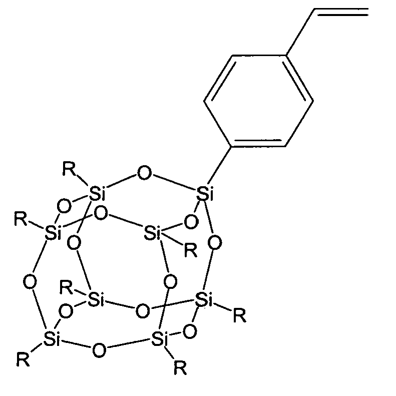 dans lequel R = un groupe cyclohexyle, un groupe cyclopentyle, un groupe isobutyle.

2. Composition d'encre durcissable par exposition à un rayonnement selon la revendication 1, dans laquelle ledit initiateur est un photoinitiateur.

3. Composition d'encre durcissable par exposition à un rayonnement selon l'une quelconque des revendications précédentes, dans laquelle ladite composition contient en outre un agent synergique faisant office d'initiateur.

4. Composition d'encre durcissable par exposition à un rayonnement selon l'une quelconque des revendications précédentes, dans laquelle ladite composition contient en outre au moins une matière chromogène.

5. Composition d'encre durcissable par exposition à un rayonnement selon la revendication 4, dans laquelle ladite matière chromogène est un colorant.

6. Composition d'encre durcissable par exposition à un rayonnement selon la revendication 4, dans laquelle ladite matière chromogène est un pigment.

7. Composition d'encre durcissable par exposition à un rayonnement selon la revendication 4, dans laquelle ladite matière chromogène est un pigment inorganique.

8. Composition d'encre durcissable par exposition à un rayonnement selon la revendication 4, dans laquelle ladite matière chromogène est un pigment dispersé ou une solution solide d'un pigment.

9. Composition d'encre durcissable par exposition à un rayonnement selon l'une quelconque des revendications 6 à 8, dans laquelle ledit pigment est choisi parmi le groupe constitué par Pigment Yellow 1, 3, 128, 109, 93, 17, 14, 10, 12, 13, 83, 65, 75, 74, 73, 138, 139, 154, 151, 180, 185 ; Pigment Red 122, 22, 23, 17, 210, 170, 188, 185, 146, 144, 176, 57 : 1, 184, 202, 206, 207 ; Pigment Blue 15 : 3, Pigment Blue 15 : 2, Pigment Blue 15 : 1, Pigment Blue 15 : 4, Pigment Blue 15 : 6, Pigment Blue 16, et du noir de carbone.

10. Composition d'encre durcissable par exposition à un rayonnement selon l'une quelconque des revendications précédentes, dans laquelle ladite composition comprend en outre au moins un composé photopolymérisable choisi parmi le groupe constitué par des méthacrylates d'éther vinylique et des acrylates d'éther vinylique.

11. Composition d'encre durcissable par exposition à un rayonnement selon la revendication 10, dans laquelle ledit méthacrylate d'éther vinylique ou ledit acrylate d'éther vinylique est choisi parmi le groupe constitué par :

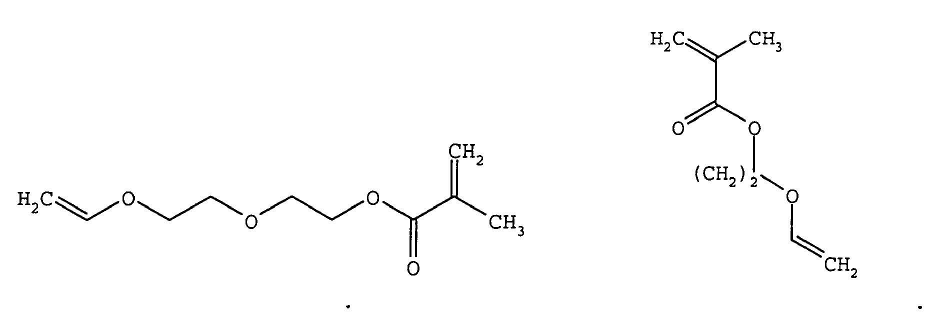

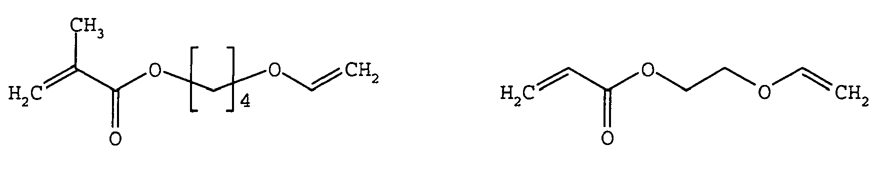

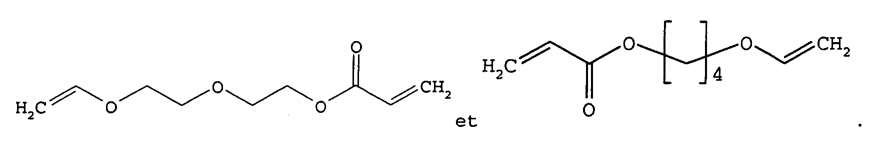

12. Composition d'encre durcissable par exposition à un rayonnement selon l'une quelconque des revendications précédentes, dans laquelle ladite composition d'encre contient en outre un deuxième monomère, oligomère ou prépolymère photopolymérisable.

13. Composition d'encre durcissable par exposition à un rayonnement selon la revendication 12, dans laquelle ledit deuxième monomère choisi parmi le groupe constitué par des acrylates de polyester, des acrylates d'uréthane, des acrylates de polyester, des acrylates de polyéther et des acrylates époxy modifiés par un groupe amino.

14. Composition d'encre durcissable par exposition à un rayonnement selon l'une quelconque des revendications précédentes, dans laquelle ladite composition contient en outre de l'eau faisant office de solvant.

15. Composition d'encre durcissable par exposition à un rayonnement selon l'une quelconque des revendications précédentes, dans laquelle ladite composition contient en outre de l'eau et/ou au moins un solvant organique.

16. Composition d'encre durcissable par exposition à un rayonnement selon l'une quelconque des revendications précédentes, dans laquelle ladite composition comprend en outre au moins un polymère conducteur ou semi-conducteur.

17. Composition d'encre durcissable par exposition à un rayonnement selon la revendication 16, dans laquelle ledit au moins un polymère conducteur ou semi-conducteur est choisi parmi le groupe constitué par des polyanilines substituées, des polyanilines non substituées, des polypyrroles, des polythiophènes substitués, des polythiophènes non substitués, des poly(phénylènevinylènes) substitués, des poly (phénylènevinylènes) non substitués et des polyfluorènes.

18. Composition d'encre durcissable par exposition à un rayonnement selon l'une quelconque des revendications précédentes, dans laquelle ladite composition comprend en outre au moins un antioxydant.

19. Composition d'encre durcissable par exposition à un rayonnement selon l'une quelconque des revendications précédentes, dans laquelle ladite composition comprend en outre un dendrimère.

20. Composition d'encre durcissable par exposition à un rayonnement selon l'une quelconque des revendications précédentes, dans laquelle la viscosité de ladite composition d'encre se situe entre 1 et 100 mPa.s à 25 °C.

21. Composition d'encre durcissable par exposition à un rayonnement selon l'une quelconque des revendications précédentes, dans laquelle ladite composition d'encre durcissable par exposition à un rayonnement est une composition d'encre pour jet d'encre durcissable par exposition à un rayonnement.

22. Procédé pour obtenir par jet d'encre une image incolore, monochrome ou polychrome, comprenant les étapes consistant à projeter un ou plusieurs courants de gouttelettes d'encre possédant une composition selon l'une quelconque des revendications précédentes sur un matériau de réception d'encre pour jet d'encre et soumettre l'image obtenue à un durcissement par exposition à un rayonnement.

23. Procédé selon la revendication 22, dans lequel ledit durcissement par exposition à un rayonnement est mis en oeuvre au moyen d'au moins une source de rayonnement ultraviolet et/ou d'au moins une source de faisceaux électroniques.

24. Procédé selon la revendication 22, dans lequel ledit durcissement représente un procédé de polymérisation faisant appel à des radicaux libres.

25. Procédé selon la revendication 22, dans lequel ledit durcissement représente un procédé de polymérisation de type cationique.

26. Procédé selon l'une quelconque des revendications 22 à 25, dans lequel ledit matériau de réception de jet d'encre est choisi parmi le groupe constitué par du papier, du papier couché, du papier enduit de polyoléfines, du carton, du bois, des panneaux composés, des plastiques, du plastique enduit, du canevas, des textiles, du métal, du verre, des produits à base de fibres végétales, du cuir, des matériaux magnétiques et des céramiques, ou encore des supports munis d'une couche acceptant l'encre.

27. Procédé selon la revendication 26, dans lequel ladite couche acceptant l'encre contient un pigment microporeux ou un mélange polymère.
